# EUROPÄISCHE PATENTANMELDUNG

(11) **EP 1 860 167 A1**
(43) Veröffentlichungstag der Anmeldung: **28.11.2007**
(21) Anmeldenummer: 06114496.0
(22) Anmeldetag: 24.05.2006
(51) Int. Cl.: C09J 5/00

(54) **Klebverbundkörper mit erhöhter Haftung**

(71) Anmelder: Sika Technology AG, 6340 Baar (CH)
(72) Erfinder: Konstanzer, Martin, 8048 Zürich (CH); Siegrist, Christian, 8134 Adliswil (CH)
(74) Vertreter: Sika Patent Attorneys

(57) **Zusammenfassung**

Die vorliegende Erfindung betrifft das Gebiet der Klebverbundkörper. Es wurde gefunden, dass durch gezielte Einschnürung des Klebstoffes die Haftung auf einer Vielzahl von Substraten verbessert werden kann und dadurch die durch den Klebverbundkörper übertragene Kraft zwischen den Fügepartner erhöht werden kann. Es sind verschiedene Verfahren offenbart, wie ein Klebverbundkörper mit eingeschnürter Klebstoffschicht hergestellt werden können.

## Beschreibung

### Technisches Gebiet

Die Erfindung betrifft das Gebiet der Verklebungen von Substraten mit Klebstoffen.

### Stand der Technik

Beim Herstellen von Klebverbundkörpern wird üblicherweise der Klebstoff in Form einer Dreiecksraupe auf das zu verklebende Substrat appliziert und anschliessend mit einem weiteren Substrat verpresst. Die Dimension der Dreiecksraupe wird hierbei so ausgelegt, dass nach dem Verpressen auf die gewünschte Klebstoffschichtdicke der Klebstoff im Querschnitt durch die Verklebung des Klebverbundkörpers quer zur Verklebungsraupe eine Rechtecksform, Quadratform, Tonnenform oder trapezoide Form oder Rautenform oder Rautenform aufweist.

Die Haftung ist in der Klebstofftechnologie ein zentraler Punkt. Denn Kräfte zwischen den Fügeteilpartnern, d.h. den verklebten Substraten des Klebverbundkörpers können lediglich Kräfte übertragen, wenn der Klebstoff Haftung auf den Substraten aufweist. Da die Haftung von Klebstoffen auf den zu verklebenden Substraten sehr stark materialabhängig ist, werden vielfach Primer eingesetzt, welche eine Haftbrücke zwischen Klebstoff und Substrat darstellen.

Es hat sich jedoch gezeigt, dass diese übliche Anordnung in einem Klebverbund, insbesondere bei hochmoduligen Klebstoffen, nachteilig ist, insbesondere bei tiefen Temperaturen. Es wurde nämlich gefunden, dass bei Kraftbelastungen vielfach ein Versagen des Klebverbundes an der Grenzfläche zwischen Substrat und Klebstoff, beziehungsweise zwischen Substrat und Primer oder zwischen Primer und Klebstoff oder oberflächennah innerhalb des Substrates auftritt. Ein besonders grosser Schwachpunkt liegt jeweils an Rändern des Klebstoffes vor. An diesen Punkten treffen drei Medien aufeinander, nämlich Klebstoff, Substrat, beziehungsweise Primer, und ein drittes Medium, das in diesem Dokument als "an den Klebstoff angrenzendes Medium (M)" bezeichnet wird, das typischerweise Luft ist.

### Darstellung der Erfindung

Die Aufgabe der vorliegenden Erfindung ist es daher, einen Klebverbundkörper mit erhöhter Haftung und damit mit höherer Kraftübertragung zur Verfügung zu stellen.

Gelöst wird diese Aufgabe durch einen Klebverbundkörper gemäss Anspruch 1. Völlig überraschend wurde gefunden, dass diese Erhöhung der Haftung, respektive der Kraftübertragung, durch eine gezielt hergestellte Geometrie des Klebstoffs, das heisst durch eine Einschnürung des Klebstoffs, erzielt werden kann. Somit kann ohne Veränderung der chemischen Zusammensetzung eines Klebstoffs durch einfache Verfahrensschritte vor dem Aushärten des Klebstoffes die Haftung, respektive die Höhe der zu übertragenden Kraft, eines Klebverbundes erhöht werden. Dieser Vorteil kommt besonderes bei kalten Temperaturen, d.h. < 0°C, insbesondere < -20°C, zu Tage. Es ist klar, dass dies ein grosser und wertvoller technologischer Fortschritt für die Klebetechnologie ist. Besonders überraschend ist, dass diese zusätzliche Verfahrensschritte sehr einfache Verfahrensschritten sind, die ohne grösseren Aufwand realisierbar sind.

Neben dem Klebverbundkörpers ist somit auch verschiedene Möglichkeiten dieser Verfahren der Herstellung eines Klebverbundkörpers, d.h. nach Anspruch 11, 12 und 14, sowie nach diesen Verfahren hergestellten ausgehärteten Artikel gemäss Anspruch 18 und ein Verfahren zur Erhöhung der Kraftübertragung gemäss Anspruch 19 Gegenstand der Erfindung.

Weitere Ausführungsformen sind Gegenstand der abhängigen Ansprüche.

### Wege zur Ausführung der Erfindung

Die vorliegende Erfindung betrifft einen Klebverbundkörper umfassend ein erstes Substrat (S1) und ein zweites Substrat (S2), welche mittels eines Klebstoffes (K) miteinander verklebt sind. Gegebenenfalls weist der Klebverbundkörper zwischen dem ersten Substrat (S1) und dem Klebstoff ein erster Primer und/oder zwischen dem zweiten Substrat (S) und dem Klebstoff ein zweiter Primer (P2) auf.

Der Klebstoff weist in demjenigen Querschnitt (Q) durch den Verbundkörper senkrecht zur Oberfläche des ersten Substrates (S1) welcher die kleinste Querschnittsfläche des Klebstoffs (K) ergibt, eine Einschnürung auf. Dies ist typischerweise der Querschnitt quer zur Raupenrichtung, wenn der Klebstoff wie üblicherweise in industriellen Verklebungen als Klebstoffraupe appliziert wird.

Unter "Substrat" wird im gesamten vorliegenden Dokument ein fester Körper verstanden, an dessen Oberfläche eine Verklebung erfolgt, beziehungsweise erfolgte.

Eine Einschnürung ist dann vorhanden, wenn der Klebstoff im Bereich des Kontaktes des Klebstoffs mit dem ersten Substrat (S1), respektive -falls vorhanden- mit dem ersten Primer (P1) und mit dem zweiten Substrat (S2), respektive -falls vorhanden- mit dem zweiten Primer (P2), eine breitere Klebstoffschicht als im Innenbereich des Klebstoffs aufweist.

Als eine mögliche Definition des Terms "Einschnürung" kann wie folgt erfolgen: Im Querschnitt (Q) ist die Einschnürungsstrecke (d₂), vielfach auch als Einschnürungslänge (d₂) bezeichnet, kleiner als die kleinere der zwei Grenzflächenlängen (d₁). Die Einschnürungsstrecke (d₂) ist hierbei in diesem Querschnitt (Q) die kleinste Strecke im Klebstoff zwischen zwei Phasengrenzen von Klebstoff zu dem an den Klebstoff angrenzenden Medium (M). Die Grenzflächenlängen (d₁) sind hierbei die Kontaktstreckenlängen von Klebstoff zum Substrat (S1, S2) oder, falls vorhanden, zum Primer (P1, P2).

Das an den Klebstoff angrenzende Medium (M) ist weder das erste Substrat (S1) noch das zweite Substrat (S2) noch der erste Primer (P1) noch der zweite Primer (P2). Dieses an den Klebstoff angrenzende Medium (M) ist typischerweise Luft.

Insbesondere ist hierbei das Verhältnis d₂/d₁ von Einschnürungslänge (d₂) zu Grenzflächenlänge (d₁) einen Wert von kleiner 1 und grösser 0, insbesondere einen Wert zwischen 0.5 und 0.9, bevorzugt zwischen 0.5 und 0.8.

Eine bevorzugte Ausführungsform der Einschnürung ist, dass im oben beschriebenen Querschnitt (Q) ein erster Winkel (α₁), ein zweiter Winkel (α₂), ein dritter Winkel (α₃) und ein vierter Winkel (α₄) vorhanden sind, welche je > 5° und < 85° sind.

Hierbei ist der erste Winkel (α₁) derjenige Winkel, welcher am ersten Kontaktpunkt (C₁) aufgespannt wird von den Strecken zwischen erstem Kontaktpunkt (C₁) und zweitem Kontaktpunkt (C₂) sowie zwischen erstem Kontaktpunkt (C₁) und erstem Einschnürungspunkt (E₁).

Der zweite Winkel (α₂) ist derjenige Winkel, welcher am zweiten Kontaktpunkt (C₂) aufgespannt wird von den Strecken zwischen zweitem Kontaktpunkt (C₂) und erstem Kontaktpunkt (C₁) sowie zwischen zweiten Kontaktpunkt (C₂) und zweitem Einschnürungspunkt (E₂).

Der dritte Winkel (α₃) ist derjenige Winkel, welcher am dritten Kontaktpunkt (C₃) aufgespannt wird von den Strecken zwischen drittem Kontaktpunkt (C₃) und viertem Kontaktpunkt (C₄) sowie zwischen drittem Kontaktpunkt (C₃) und erstem Einschnürungspunkt (E₁).

Der vierte Winkel (α₄) ist derjenige Winkel, welcher am vierten Kontaktpunkt (C₄) aufgespannt wird von den Strecken zwischen viertem Kontaktpunkt (C₄) und drittem Kontaktpunkt (C₃) sowie zwischen viertem Kontaktpunkt (C₄) und zweitem Einschnürungspunkt (E₂).

Hierbei stellen der erste Einschnürungspunkt (E₁) und der zweite Einschnürungspunkt (E₂) die Endpunkte der Einschnürungsstrecke d₂ dar.

Bei all diesen beschrieben Winkeln (α₁, α₂, α₃, α₄) streicht der Winkel jeweils über den Klebstoff.

An den "Kontaktpunkten" treffen in vorgängig beschriebenen Querschnitt (Q) drei Medien, nämlich Klebstoff (K), Substrat (S1, S2), beziehungsweise Primer (P1, P2) -falls Substrate (S1, S2) Primer-beschichtet sind-, und das an den Klebstoff angrenzende Medium (M), aufeinander.

Schliesslich liegen in diesem Querschnitt (Q) einerseits der erste Kontaktpunkt (C₁), der dritte Kontaktpunkt (C₃) und der erste Einschnürungspunkt (E₁) auf jeweils derselben Phasengrenze (P1) zwischen Klebstoff und Klebstoff angrenzendem Medium (M) und andererseits liegen jeweils der zweite Kontaktpunkt (C₂), der vierte Kontaktpunkt (C₄) und der zweite Einschnürungspunkt (E₂) auf derselben Phasengrenze (P2) zwischen Klebstoff und Klebstoff angrenzendem Medium (M). Die zwei Phasengrenzen (P1, P2) liegen auf verschiedenen Seiten des Klebstoffs.

In einer bevorzugten Ausführungsform beträgt der erste Winkel (α₁) und/oder der zweite Winkel (α₂) und/oder der dritte Winkel (α₃) und/oder der vierte Winkel (α₄) einen Wert zwischen 10° und 80°, insbesondere zwischen 25° und 75°, vorzugsweise zwischen 35° und 70°, bevorzugt zwischen 45° und 65°.

In einer noch mehr bevorzugten Ausführungsform betragen der erste, der zweite, der dritte und der vierte Winkel (α₁, α₂, α₃ und α₄) alle einen Wert zwischen 10° und 80°, insbesondere zwischen 25° und 75°, vorzugsweise zwischen 35° und 70, bevorzugt zwischen 45° und 65°.

Sind die beschriebenen Winkel (α₁, α₂, α₃, α₄) sehr gross, d.h. grösser als 85°, ist die Steigerung der Haftung nur unwesentlich. Klebverbundkörper mit sehr kleinen derartigen Winkeln, d.h. kleiner als 5°, sind einerseits sehr schwierig herzustellen und andererseits lassen sich, bedingt durch die starke Einschnürung und durch limitierte Kohäsionsfestigkeit des Klebstoffes, üblicherweise nur mehr kleine Kräfte übertragen.

Das erste Substrat (S1) und das zweite Substrat (S2) sind aus denselben oder aus verschiedenen Materialien. Die Substrate können aus einer Vielzahl von möglichen Materialien bestehen.

Geeignete Substrate (S1, S2) sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farbanstrich und Lacke, insbesondere Automobildecklacke.

Es hat sich gezeigt, dass die Steigerung der Haftung, beziehungsweise der höheren Kraftübertragung, durch die eingeschnürte Klebstoffgeometrie sich insbesondere bei beschichteten Substraten sich als besonders vorteilhaft herausstellt. Insbesondere bei beschichteten Substraten, deren Beschichtung ein geringe Zwischenhaftung zum Beschichtungsuntergrund und/oder welche eine geringe Eigenfestigkeit aufweisen, haben sich diese Vorteile der vorliegenden Erfindung sehr stark manifestiert.

Derartige beschichtete Substrate sind insbesondere beschichtete Metalle oder Metalllegierungen.

In einer ersten bevorzugten Ausführungsform ist das erste Substrat (S1) und/oder zweite Substrat (S2) ein Metall oder eine Legierung, dessen oder deren Oberfläche mit einer chemischen Vorbehandlung, insbesondere mit einer chemischen Vorbehandlung zur Steigerung der Korrosionsbeständigkeit, modifiziert worden ist. Eine derartige chemische Vorbehandlung ist typischerweise ein Galvanisierungsprozess. Als Substrat dessen Oberfläche mit einer chemischen Vorbehandlung modifiziert worden ist, ist insbesondere ein verzinktes Substrat zu verstehen. Insbesondere handelt es sich hierbei um eine Verzinkung durch Feuerverzinkung, elektrolytische Verzinkung, Bonazink, Galvalume, Galfan, Galvannealed verzinkt.

Bevorzugt als Substrat, dessen Oberfläche mit einer chemischen Vorbehandlung modifiziert worden ist, wird ein feuerverzinkter Stahl, Bonazink-Stahl, Galvalume-Stahl, ein Galfan-Stahl oder Galvannealed-Stahl, insbesondere ein feuerverzinkter Stahl, elektrolytisch verzinkter Stahl, Bonazink-Stahl oder Galvannealed-Stahl. Als meist bevorzugtes erstes Substrat (S1) und/oder zweites Substrat (S2) ist in dieser Ausführungsform Galvannealed-Stahl.

In einer zweiten bevorzugten Ausführungsform ist das erste Substrat (S1) und/oder zweite Substrat (S2) ein Metall oder eine Legierung, das oder die lackiert ist. Das lackierte Metall oder Legierung kann einen oder mehrere Lacke aufweisen. Typischerweise handelt es sich hierbei um einen Automobillack, welcher vorzugsweise einen KTL-Lack (KTL=Kathodische Tauchlackierung), einen Füller, gegebenenfalls einen Basislack (Base Coat) und einen Decklack (Topcoat) aufweist. Vorzugsweise ist der Klebstoff -gegebenenfalls über einen Primer- in Kontakt mit dem lackierten Metall oder Legierung.

In einer dritten bevorzugten Ausführungsform ist das erste Substrat (S1) und/oder zweite Substrat (S2) ein mit Primer beschichtetes Substrat. Insbesondere ein Primer beschichtetes oder beschichteter Glas, Glaskeramik, Beton, Mörtel, Backstein, Ziegel, Gips und Naturstein wie Granit oder Marmor; Metall oder Legierung wie Aluminium, Stahl, Buntmetalle, verzinktes Metall; organisches Substrate wie Holz, Kunststoff wie PVC, Polycarbonate, PMMA, Polyester, Epoxidharz; beschichtetes Substrat wie pulverbeschichtetes Metall oder Legierung; sowie Farbanstrich und Lack, insbesondere Automobildecklack. Der Primer ist insbesondere ein Primer mit einem Epoxy- oder IsocyanatGruppen aufweisenden Bindemittel.

Es hat sich nämlich gezeigt, dass derart beschichtete Substrate in Klebverbundkörpern gemäss dem Stand der Technik sich bei bestimmten Kräftebelastungen, insbesondere beim Vorliegen von Schälkräften, sich die Beschichtung vom Untergrund löst oder die Beschichtung kohäsiv bricht. Es hat sich völlig überraschen gezeigt, dass dies mit dem erfindungsgemässen Aufbau dies nicht oder bedeutend weniger der Fall ist.

Das erste Substrat (S1) und das zweite Substrat (S2) sind vorzugsweise parallel zueinander angeordnet. Dem Fachmann ist natürlich klar, dass auch Verklebungen vorkommen, bei denen die Substrate nicht plan sind, beziehungsweise, wo die Substrate nicht parallel zueinander liegen.

Die Enddicke der Klebstoffschicht (d_{K}), auch "Endklebstoffdicke" genannt, beträgt vorzugsweise zwischen 1 mm und 20 mm, insbesondere zwischen 1 mm und 10 mm, bevorzugt zwischen 3 mm und 8 mm. Die Endklebstoffdicke (d_{K}) entspricht dem Abstand zwischen dem ersten und dritten Kontaktpunkten (C₁, C₃), beziehungsweise zwischen dem zweiten und vierten Kontaktpunkten (C₂, C₄) in dem beschriebenen Querschnitt (Q). Falls diese zwei Strecken nicht gleich lang sind, d.h. wenn die Substratoberflächen (S1, S2) nicht parallel sind, wird die mittlere Klebstoffdicke, insbesondere der Mittelwert aus dem Abstand des ersten vom dritten Kontaktpunkt (C₁, C₃), und des Abstandes des zweiten vom vierten Kontaktpunkt (C₂, C₄) als Endklebstoffdicke (d_{K}) bezeichnet.

Grundsätzlich spielt die Dicke der Klebstoffschicht, welche zwischen den Substraten liegt, keine Rolle. Bevorzugt liegt die Enddicke der Klebstoffschicht zwischen 1 und 20 mm, insbesondere zwischen 1 mm und 10 mm, bevorzugt zwischen 3 mm und 8 mm.

Es ist wesentlich für das Verständnis der Erfindung, dass die oben angebenen Definitionen der Geometrie des Klebverbundkörpers im unbelasteten Zustand anzuwenden sind und nicht unter Zugbelastung durch angelegte Kräfte. Der Begriff "unbelastet" ist in diesem Zusammenhang jedoch nicht als absolut zu betrachten. Es ist dem Fachmann klar, dass auf jede Verklebung, bereits während dem Aushärten, gewisse Kräfte, zum Beispiel die aus dem Gewicht der Fügepartner resultierenden Gravitationskräfte, wirken. Es sind somit für die Interpretation des verwendeten Terms "unbelastet" alle Kräfte, die bereits während dem Aushärten des Klebstoffes wirken, ausser Betracht zu lassen.

Die Grenzflächenlänge (d₁) weist typischerweise einen Wert von 2 mm bis 4 cm, insbesondere zwischen 5 mm bis 2 cm auf. Da der Klebstoff, wie weiter unten noch detaillierter beschrieben wird, typischerweise mittels Dreieckdüse als Dreickraupe mit einer Basisbreite, welche im Wesentlichen der Grenzflächenlänge (d₁) entspricht, aufgetragen wird, wird ein Wert zwischen 8 mm und 16 mm als Grenzflächenlänge (d₁) bevorzugt.

Der Klebstoff (K) kann unterschiedlicher Art sein. Grundsätzliche ist jeder bekannte Klebstoff geeignet. Insbesondere handelt es sich um reaktive Klebstoffe, d.h. Klebstoffe, welche nach der Applikation chemisch reagieren und dadurch vernetzen. Eine derartige chemische Reaktion kann durch eine Reaktion von zwei Komponenten eines zweikomponentigen Klebstoffes erfolgen, oder es kann eine Reaktion mit Wasser, welche aus der Luft stammt, erfolgen.

Beispiele für derartige chemisch vernetzende Systeme sind als zweikomponentig oder einkomponentig ausgestaltet möglich. Zweikomponentige Klebstoffe sind insbesondere Epoxidharzklebstoffe, Polyurethanklebstoffe, (Meth)acrylatklebstoffe. Einkomponentige Klebstoffe sind insbesondere feuchtigkeitshärtend, wie Polyurethanklebstoffe, Silikonklebstoffe sowie Klebstoffe auf Basis von Alkoxysilan-funktionellen Prepolymeren.

Zweikomponentige Klebstoffe können über radikalische, anionische oder kationische Polymerisation oder über Additionsreaktionen oder über Kondensationsreaktionen beim Mischen der zwei Komponente vernetzen.

Als (Meth)acrylatklebstoffe sind zweikomponentige Klebstoffe zu verstehen, deren erste Komponente Acrylsäure und/oder Methacrylsäure und/oder deren Ester umfasst, und deren zweite Komponente ein Radikalbildner, insbesondere ein Peroxid, umfasst. Bevorzugte derartige Klebstoffe sind unter der Produktelinie SikaFast® kommerziell von Sika Schweiz AG erhältlich.

Als Epoxidharzklebstoffe werden Klebstoffe verstanden, welche auf Basis von Glycidylethern, insbesondere von Diglycidylether von Bisphenol-A und/oder Bisphenol-F, formuliert sind. Besonderes geeignete sind zweikomponentige Epoxidharzklebstoffe, deren eine Komponente Diglycidylether von Bisphenol-A und/oder Bisphenol-F enthalten und deren zweite Komponente Polyamine und/oder Polymerkaptane enthalten. Beispielhafte zweikomponentige Epoxidharzklebstoffe werden unter der Produktelinie Sikadur® kommerziell von Sika Schweiz AG vertrieben.

Zweikomponentige Polyurethanklebstoffe enthalten typischerweise in einer Komponente Polyisocyanate und in der anderen Komponente ein Polyamin und/oder Polyol. Beispielhafte zweikomponentige Polyurethanklebstoffe werden unter der Produktelinie SikaForce® kommerziell von Sika Schweiz AG vertrieben.

Feuchtigkeitshärtende einkomponentige Polyurethanklebstoffe enthalten Isocyanatgruppen aufweisende Polyurethanprepolymere, die unter dem Einfluss von Luftfeuchtigkeit Anlass zur Vernetzung geben.

Diese Isocyanatgruppen aufweisende Prepolymere werden typischerweise aus Polyolen und Polyisocyanate gewonnen. Als Polyole hierfür geeignet sind insbesondere Di- und Triole, insbeondere Polyesterdiole, -triole und Polyoxyalkylendiole und -triole, auch Polyetherdiole und -triole, sowie deren Kombinationen.

Es hat sich insbesondere als vorteilhaft herausgestellt, wenn Polyoxyalkylenpolyole verwendet werden, welche einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren) aufweisen. Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel Mₙ.

Als Polyisocyanate für die Herstellung eines Isocyanatgruppen aufweisenden Polyurethanprepolymers können beispielsweise die folgenden handelsüblichen Polyisocyanate verwendet werden:

1,6-Hexamethylendüsocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendüsocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=lsophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendüsocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Als besonders vorteilhaft haben sich Kombinationen von getrennt hergestellten Polyurethanprepolymeren, insbesondere wovon mindestens eines aus einem Polyesterdiole und Polyisocyanat und mindestens eines aus einem Polyoxyalkylendiole und Polyisocyanat hergestellt wird. Selbstverständlich sind auch Polyurethanprepolymermischungen besonders vorteilhaft welche in situ aus einer Polyolmischung, insbesondere von Polyolmischungen von mindestens einem Polyesterdiol und mindestens einem Polyoxyalkylendiol, sowie mindestens einem Polyisocyanat hergestellt werden. Insbesondere lassen sich auf diese Art und Weise Polyurethanklebstoffe und - dichtstoffe herstellen, die einen so genannten "Quick-Fix" Charakter aufweisen. Derartige Klebstoffe werden bei leicht erhöhter Temperatur von etwa 50 - 80°C applizieren. Bei dieser Temperatur sind die beteiligten Prepolymere geschmolzen. Beim Abkühlen des Klebstoffes auf Raumtemperatur verfestigt sich mindestens ein Teil der benutzten Prepolymere. Derartige Quickfix-Klebstoffe sind sehr vorteilhaft, weil sie nach dem Erreichen der Einschnürung des Klebverbundkörpers bereits genügend Tragkraft aufweisen, dass bis zum Aushärten der Verbundkörper nicht fixiert werden muss, um ein Abrutschen zu verhindern

Bevorzugte feuchtigkeitshärtende Polyurethanklebstoffe werden von Sika Schweiz AG kommerziell unter der Produktelinie Sikaflex® vertrieben.

Feuchtigkeitshärtende Silikonklebstoffe sind Klebstoffe, welche auf Polyorganosiloxanen basieren, das heisst, sie weisen Siloxan-Gruppen -Si-O-Si- auf. Die feuchtigkeitshärtenden Silikonklebstoffe werden vielfach auch als RTV-1 Silikone (RTV-1 = Raum-Temperatur-Vernetzung 1-komponentig) bezeichnet. Die Aushärtung unter Feuchtigkeitseinfluss erfolgt unter Abspaltung von insbesondere Alkoholen oder Säuren, vor allem Methanol, Ethanol und Essigsäure. Derartige feuchtigkeitshärtende Klebstoffe werden beispielsweise von Wacker Chemie AG unter dem Handelsnamen Elastosil® vertrieben.

Es gibt unterschiedliche Klebstoffe auf Basis von Alkoxysilanfunktionellen Prepolymeren. Insbesondere sind bevorzugt diejenigen, welche auf einem der drei Typen von Alkoxysilanfunktionellen Prepolymeren beruhen:
(i) silanfunktionelles Polyurethanprepolymer **P1,** erhältlich durch die Umsetzung eines Aminoalkoxysilans mit einem Isocyanatgruppen aufweisenden Polyurethanprepolymer
(ii) silanfunktionelles Polyurethanprepolymer **P2**, erhältlich durch die Umsetzung eines Isocyanatoalkoxysilans mit einem Hydroxylgruppen aufweisenden Prepolymer
(iii) silanfunktionelles Prepolymer **P3,** erhältlich durch die Hydrosilylierung eines Prepolymers mit endständigen Doppelbindungen.

Das silanfunktionelle Polyurethanprepolymer **P1** wird bevorzugt aus einem für die einkomponentigen feuchtigkeitshärtenden Polyurethanklebstoffe bereits beschriebenen Isocyanatgruppen aufweisenden Polyurethanprepolymer und einem Aminoalkoxysilan hergestellt. Als Aminosilane sind insbesondere Trialkoxysilane, welche einen organischen, an das Siliziumatom über eine Si-C-Bindung gebundenen Rest aufweisen, welcher mindestens eine Aminogruppe aufweist, geeignet.

Das silanfunktionelle Polyurethanprepolymer **P2** wird bevorzugt aus den für die Herstellung der Isocyanatgruppen aufweisenden Polyurethanprepolymeren verwendeten und bereits beschriebenen Polyole und Polyisocyanate hergestellt. Allerdings wird durch die Stöchiometrie die Reaktion derart gestaltet, dass Hydroxylgruppen aufweisenden Prepolymere entstehen. Als Isocyanatoalkoxysilane sind insbesondere Trialkoxysilane, welche einen organischen an das Siliziumatom über eine Si-C-Bindung gebundenen Rest aufweisen, welcher mindestens eine Isocyanatgruppe aufweist, geeignet.

Beispiele für kommerziell verfügbare silanfunktionelle Polyurethanpolymere **P2** sind die Produkte mit den Handelsnamen SPUR⁺® 1010LM, 1015LM und 1050MM (alle von GE); sowie Geniosil® STP-E15 und Geniosil® STP-E35 (beide von Wacker Chemie AG).

Das silanfunktionelles Prepolymer **P3**, erhältlich durch die Hydrosilylierung eines Prepolymers mit endständigen Doppelbindungen. Das Prepolymer mit endständigen Doppelbindungen sind beispielsweise Poly(meth)acrylatpolymere oder Polyetherpolymere, insbesondere von allylterminierten Polyoxyalkylenpolymeren, wie sie beispielsweise in US 3,971,751 und US 6,207,766 beschrieben sind.

Beispiele für kommerziell verfügbare silanfunktionelle Polymere **P3** sind die Produkte mit den Handelsnamen MS-Polymer® S203(H), S303(H), S227, S810, MA903 und S943, Silyl' SAX220, SAX350, SAX400 und SAX725, Silyl® SAT350 und SAT400, sowie XMAP® SA100S und SA310S (alle von Kaneka); Polymer ST50 (von Hanse-Chemie); sowie Excestar® S2410, S2420, S3430, S3630, W2450 und MSX931 (alle von Asahi Glass).

Der Klebstoff ist vorzugsweise ein pastöser Klebstoff, insbesondere auf Basis eines flüssigen bis zähflüssigen Klebstoffbindemittels und eines Füllstoffes, ist.

Besonders bevorzugt ist der Klebstoff ein Russ-gefüllter feuchtigkeitshärtender Klebstoff basierend auf einem Isocyanatgruppen und/oder Silangruppen aufweisenden Polyurethanprepolymer.

Die Reaktivität, beziehungsweise die Offenzeit, der Klebstoffe ist insbesondere derart zu wählen, dass ein Klebverbundkörper auf die, wie weiter unten beschriebene, Art und Weise hergestellt werden kann.

Es gibt unterschiedliche Möglichkeiten, wie ein erfindungsgemässer Klebverbundkörper hergestellt werden kann. Die Einschnürung wird vorzugsweise auf eine der folgenden Möglichkeit herbeigerufen:
1.) durch gezieltes Dehnen einer Verklebung vor dem Aushärten des Klebstoffs
2.) durch Verwendung von Einlageprofile einer spezifischen Geometrie
3.) durch mechanisches Entfernen von Klebstoff aus der Klebstofffuge mittels eines gerundeten Spatels.

In einem ersten Verfahren der Herstellung eines Klebverbundkörpers umfasst es die Schritte:
i) Applizieren des Klebstoffes (K) auf die Oberfläche des ersten Substrates (S1) in Form einer Dreiecksraupe mit einer Applikationsklebstoffdicke (d_{K1})
ii) Kontaktieren des Klebstoffes (K) mit der Oberfläche des zweiten Substrates (S2)
iii) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und dadurch erfolgendes Verkleinern der Klebstoffdicke von der Applikationsklebstoffdicke (dₖ₁) auf eine Verpressklebstoffdicke (dₖ₂)
iv) Einschnüren des Klebstoffes (K) durch Aufbringen einer Zugkraft (F_{z}) mit einer senkrecht auf die Oberfläche des ersten Substrates (S1) und/oder des zweiten Substrates (S2) wirkenden Kraftkomponente vor dem Ende der Offenzeit des Klebstoffes (K) und dadurch erfolgendes Vergrössern der Klebstoffdicke von der Verpressklebstoffdicke (dₖ₂) auf eine Endklebstoffdicke (dₖ)
oder
i') Applizieren des Klebstoffes (K) auf die Oberfläche des zweiten Substrates (S2) in Form einer Dreiecksraupe mit einer Applikationsklebstoffdicke (d_{K1})
ii') Kontaktieren des Klebstoffes (K) mit der Oberfläche des ersten Substrates (S1)
iii) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und dadurch erfolgendes Verkleinern der Klebstoffdicke von der Applikationsklebstoffdicke (dₖ₁) auf eine Verpressklebstoffdicke (dₖ₂)
iv) Einschnüren des Klebstoffes (K) durch Aufbringen einer Zugkraft (F_{z}) mit einer senkrecht auf die Oberfläche des ersten Substrates (S1) und/oder des zweiten Substrates (S2) wirkenden Kraftkomponente vor dem Ende der Offenzeit des Klebstoffes (K) und dadurch erfolgendes Vergrössern der Klebstoffdicke von der Verpressklebstoffdicke (dₖ₂) auf eine Endklebstoffdicke (dₖ).

Durch die Verwendung einer Dreiecksraupe bei der Applikation des Klebstoffes wird gewährleistet, dass die für die Verklebungsgeometrie richtige Menge Klebstoff verwendet wird. Die Schritte i), ii), bzw. i'), ii'), und iii) entsprechen einer Klebstoffapplikation, wie sie bereits bekannt und angewendet wird. Typischerweise erfolgt das Verpressen durch Verwendung von Abstandshalter, die in der Nähe der Klebstoffraupe in der Klebfuge angebracht werden, die garantieren sollen, dass die Dreiecksraupe optimal verpresst wird. Erfolgt die Verpressung zu wenig, resultiert eine trapezoide Klebstoffquerschnittsform. Erfolgt sie zu stark, resultiert eine tonnenförmige Klebstoffquerschnittsform.

In einer Ausführungsform ist der Abstandshalter elastisch. Durch das Verpressen wird dieser Abstandhalter zusammengequetscht. Beim Einschnüren kann sich der Abstandshalter wieder ausdehnen. Es ist besonders vorteilhaft, dass bei dieser Ausführungsform mit elastischem Abstandshalter das Substrat in der Position gehalten werden kann. In dieser Ausführungsform wird der Klebstoff jedoch vorteilhaft über den Gleichgewichtsabstand des elastischen Abstandshalter hinaus vergrössert.

Erst aufgrund des Schrittes iv) wird die Einschnürung und die damit verbundenen Vorteile erhalten. Dies ist sowohl bei einer optimalen, einer zu kleinen oder zu starken Verpressung der Fall. Die Verwendung der Terme "Applikationsklebstoffdicke (dₖ₁)", "Verpressklebstoffdicke (dₖ₂)" sowie "Endklebstoffdicke (dₖ)" in diesem Dokument sollen veranschaulichen, dass der Kernpunkt der vorliegenden Erfindung, nämlich die Einschnürung, durch gezielte Änderungen der Schichtdicke des nicht-ausgehärteten Klebstoffes erhalten werden kann. Es wurde gefunden, dass die Grenzflächenlänge, das heisst die Strecke des Kontaktes des Klebstoffes mit dem Substrat, respektive des Primers, das heisst die Strecken zwischen den ersten und zweiten Kontaktpunkt (C₁, C2) sowie zwischen dem dritten und viertem Kontaktpunkt (C₃, C₄) durch das Einschnüren unter Schritt (iv) nicht -oder nur unwesentlichverkleinert wird.

Dieses Verfahren kann manuell erfolgen oder mit Hilfe eines Roboters. Bevorzugt werden zumindest die Schritte iii) und iv) mittels eines Roboters durchgeführt. Die aufgebrachten Zug- und Druckkräfte werden vorteilhaft über Saugnäpfe auf das Substrat, beziehungsweise auf den Klebstoff, aufgebracht.

In einem zweiten Verfahren der Herstellung eines Klebverbundkörpers umfasst es die Schritte:
I) Auflegen zweier zueinander beabstandeten Profile (2,3) aus einem Material, welches vorzugsweise keine Haftung mit dem Klebstoff aufweist, und deren jeweilige Oberfläche konvex gewölbt ist in Richtung zum jeweilig anderen Profil auf die Oberfläche des ersten Substrates (S1) oder des zweiten Substrates (S2)
II) Applizieren des Klebstoffes (K) auf die Oberfläche des ersten des ersten Substrates (S1) oder des zweiten Substrates (S2) zwischen die zwei beabstandeten Profile mit einer Applikationsklebstoffdicke (d_{K1})
III) Kontaktieren des Klebstoffes mit der Oberfläche des zweiten Substrates (S2) oder des ersten Substrates (S1)
IV) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente vor dem Ende der Offenzeit des Klebstoffes (K) und dadurch erfolgendes Verkleinern der Klebstoffdicke von der Applikationsklebstoffdicke (dₖ₁) auf eine Endklebstoffdicke (dₖ)

Die Profile 2, 3 können aus einem geschäumten Material sein, insbesondere aus Schaumstoff oder Schaumgummi.

Bevorzugt wird, dass der Klebstoff wenig oder keine Haftung mit dem Profilen 2, 3 aufweist.

Die Profile 2, 3 sind vorzugsweise aus Teflon oder Polyethylen oder Polypropylen gefertigt. Die Profile können die Funktion eines Abstandhalters zwischen den zwei Substraten S1 und S2 übernehmen. Je nach Anwendung kann es von Vorteil sein, sie nach dem Aushärten des Klebstoffs zu entfernen oder im Klebverbundkörper zu belassen.

Werden die Profile nach dem Verpressen entfernt, ist es von sehr grossem Vorteil, wenn die Profile aus einem Material, welches mit dem Klebstoff keine Haftung aufweist, gefertigt sind. In diesen Fällen ist einerseits das Entfernen der Profile erleichtert und hat andererseits den grossen Vorteil, dass die Profile wieder für weitere Verklebungen einsetzbar sind.

Die Profile sind vorteilhaft für das Verfahren biegsam oder von vorgefertigter Art, die dem Verlauf der Verklebungslinie entsprechen.

Die Profile können Rundprofile sein, dies ist besonders bei den Profilen aus Schaumstoff oder Schaumgummi vorteilhaft. Rundprofile lassen sich nämlich einfach zum Beispiel durch Extrusion herstellen und sind wenig empfindlich auf die Orientierung beim Auflegen in Schritt I).

In einem dritten Verfahren der Herstellung eines Klebverbundkörpers schliesslich umfasst es die Schritte:
I) Applizieren des Klebstoffes (K) auf die Oberfläche des ersten Substrates (S1) oder des zweiten Substrates (S2) in Form einer Dreiecksraupe mit einer Applikationsklebstoffdicke (d_{K1})
II) Kontaktieren des Klebstoffes (K) mit der Oberfläche des zweiten Substrates (S2) oder des ersten Substrates (S1)
III) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und dadurch erfolgendes Verkleinern der Klebstoffdicke von der Applikationsklebstoffdicke (dₖ₁) auf eine Endklebstoffdicke (dₖ)
IV) Abstreifen von Klebstoff mittels eines Spatels (4) mit einer abgerunden Spatelkante vor dem Ende der Offenzeit des Klebstoffes (K) und dadurch erfolgendes Einschnüren des Klebstoffes

Die Spatel sind vorteilhaft aus einem Material, welches keine oder geringe Haftung mit dem Klebstoff aufweist. Deshalb sind Spatel aus Teflon oder Polyethylen oder Polypropylen bevorzugt. Derartige Spatel haben den Vorteil, dass sie leicht zu reinigen sind und deshalb für die Herstellung mehrerer Klebverbundkörper verwendet werden können.

In all diesen drei Verfahren wird der Klebstoff mittels einer geeigneten Vorrichtung appliziert. Geeignete Methoden zum Applizieren sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters, vorzugsweise über Düsen und allenfalls über Statikmischer.

In diesen drei Verfahren schliesst sich typischerweise anschliessend an die Schritte iv) oder IV) oder IV) ein weiterer Schritt v) oder V) oder v) des Aushärtens des Klebstoffes an. Es ist dem Fachmann jedoch klar, dass sofort nach dem Mischen der zwei Komponenten -im Falle von zweikomponentigen Klebstoffen- oder beim Kontakt mit Feuchtigkeit -im Falle von feuchtigkeitshärtenden Klebstoffen- Vernetzungsreaktion bereits starten und somit bereits zu Teilvernetzungen führen können. Es ist jedoch wichtig, dass diese Vernetzungsreaktionen vor dem Schritt iv), IV) oder IV) nicht so weit fortgeschritten sind, dass die Offenzeit des Klebstoffs überschritten ist. Somit ist nach dem Schritt iv) oder IV) oder IV) die Endfestigkeit noch nicht erreicht. Diese Endfestigkeit wird erst durch weiteres Fortschreiten der Aushärtungsreaktion in Schritt v) oder V) oder v) erreicht.

Der meist bevorzugte Klebstoff ist ein feuchtigkeitshärtender Klebstoff, wobei das Aushärten des Klebstoffes durch Aushärten mittels Feuchtigkeit, insbesondere Luftfeuchtigkeit, erfolgt.

Nach dem Aushärten entsteht ein ausgehärteter Klebverbundkörper.

Derartige Klebverbundkörper sind unterschiedlichster Art. Insbesondere handelt es sich hierbei um Artikel der industriellen Fertigung oder des Tief- oder Hochbaus. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders geeignet sind elastische Verklebungen im Fahrzeugbau, wie beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Es zeigte sich überraschender Weise, dass die eingeschnürten Klebverbundkörper über eine verbesserte Haftung auf diversen Untergründen, insbesondere auf Automobildecklacken, als die entsprechenden Klebverbundkörper ohne Einschnürung aufweisen und damit in der Lage sind höhere Kräfte zu übertragen. Diese Steigerungen sind insbesondere bei tiefen Temperaturen, typischerweise bei Temperaturen von <0°C, insbesondere von < -20°C, sehr stark. Es konnte eine Steigerung der Kraftübertragung von bis zu +100% beobachtet werden.

Ein weiterer Aspekt der Erfindung stellt ein Verfahren zur Erhöhung der Kraftübertragung in einem verklebten Artikel, umfassend mindestens ein erstes Substrat (S1) und ein zweites Substrat (S2) sowie einen Klebstoff, welcher die zwei Substrate miteinander verbinden, wobei der Klebstoff eine Einschnürung aufweist, dar.

Die Einschnürung ist insbesondere derart, dass der Querschnitt der Verklebung der Klebstoff kein trapezoide oder quadratische oder rechteckige Form oder Rautenform oder Tonnenform aufweist.

### Kurze Beschreibung der Zeichnungen

Im Folgenden wird die Erfindung anhand von Zeichnungen schematisch weiter veranschaulicht. Gleiche Elemente sind in den verschiedenen Figuren mit den gleichen Bezugszeichen versehen. Bewegungen und Kräfte sind mit Pfeilen angegeben. Es zeigen
- Fig. 1: Aufbau eines Klebebverbundkörpers
Fig.1a Querschnitt (Q) durch einen Klebverbundkörper senkrecht zur Oberfläche des Substrates mit kleinster Querschnittsfläche des Klebstoffs
Fig. 1b Querschnitt (Q) durch einen Klebverbundkörper senkrecht zur Oberfläche des Substrates mit kleinster Querschnittsfläche des Klebstoffs, bei dem die Substratoberflächen Primerbeschichtet sind
Fig. 1c Querschnitt (Q) durch einen Klebverbundkörper senkrecht zur Oberfläche des Substrates mit kleinster Querschnittsfläche des Klebstoffs, bei dem die Substratoberflächen S1 und S2 nicht parallel zueinander angeordnet sind.
- Fig.2: Nicht erfindungsgemässe Klebverbundkörper im Querschnitt (Q) senkrecht zur Oberfläche des Substrates mit kleinster Querschnittsfläche des Klebstoffs,:
Fig.2a Klebstoffquerschnitt mit rechteckiger Form
Fig.2b Klebstoffquerschnitt mit quadratischer Form
Fig.2c Klebstoffquerschnitt mit trapezoider Form
Fig.2d Klebstoffquerschnitt mit Rauten-Form
Fig.2e Klebstoffquerschnitt in Tonnen-Form
- Fig. 3: Erstes Herstellungsverfahren eines Klebverbundkörpers: Querschnitt (Q) senkrecht zur Oberfläche des Substrates mit kleinster Querschnittsfläche des Klebstoffs :
Fig.3a Klebstoffapplikation und Verpressen
Fig.3b Einschnüren des Klebstoffs
Fig.3c Endgeometrie des Klebverbundkörpers nach Einschnüren
- Fig. 4: Zweites Herstellungsverfahren eines Klebverbundkörpers: Querschnitt (Q) senkrecht zur Oberfläche des Substrates mit kleinster Querschnittsfläche des Klebstoffs:
Fig.4a Aufgelegte Profile
Fig.4b Klebstoffapplikation und Verpressen
Fig.4c Endgeometrie des Klebverbundkörpers nach Verpressen
- Fig.5: Drittes Herstellungsverfahren eines Klebverbundkörpers: Querschnitt (Q) senkrecht zur Oberfläche des Substrates mit kleinster Querschnittsfläche des Klebstoffs :
Fig.5a Klebstoffapplikation und Verpressen
Fig.5b Abstreifen des Klebstoffs mit gerundetem Spatel
Fig.5c Endgeometrie des Klebverbundkörpers nach Abstreifen
- Fig. 6: Herstellung von Zugscherprüfkörpern
Fig.6a schematischer Querschnitt (Q) durch verwendete Zugscherprobenkörper-Form 6.
Fig.6b Fotographische Seitenansicht der verwendeten Zugscherprobenkörper-Form 6
Fig.6c schematischer Querschnitt (Q) durch verwendete Zugscherprobenkörper-Form 6 mit Klebverbundkörper nach dem Verpressen.
Fig.6d schematischer Querschnitt (Q) durch verwendete Zugscherprobenkörper-Form 6 mit Klebverbundkörper nach dem Einschnüren.
Fig.6e Fotographische Seitenansicht der verwendeten Zugscherprobenkörper-Form 6 mit Klebverbundkörper 1 nach dem Einschnüren.

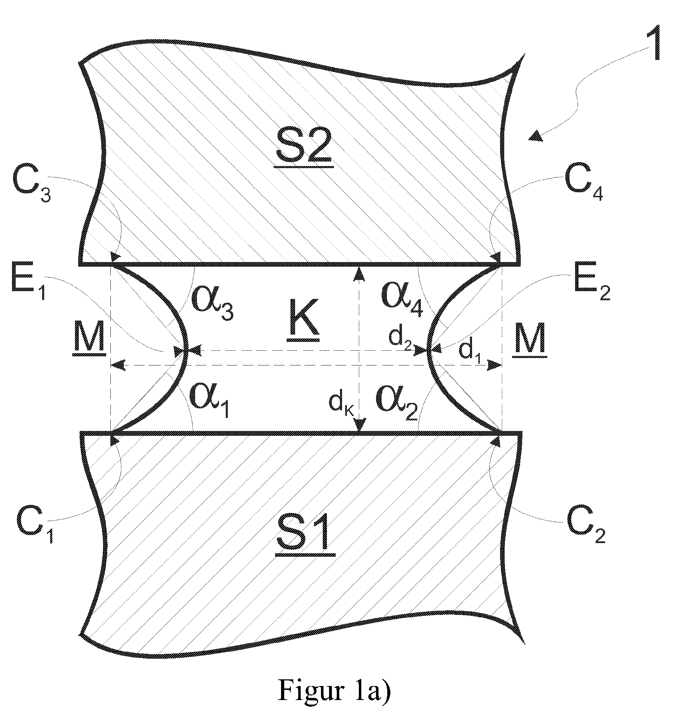

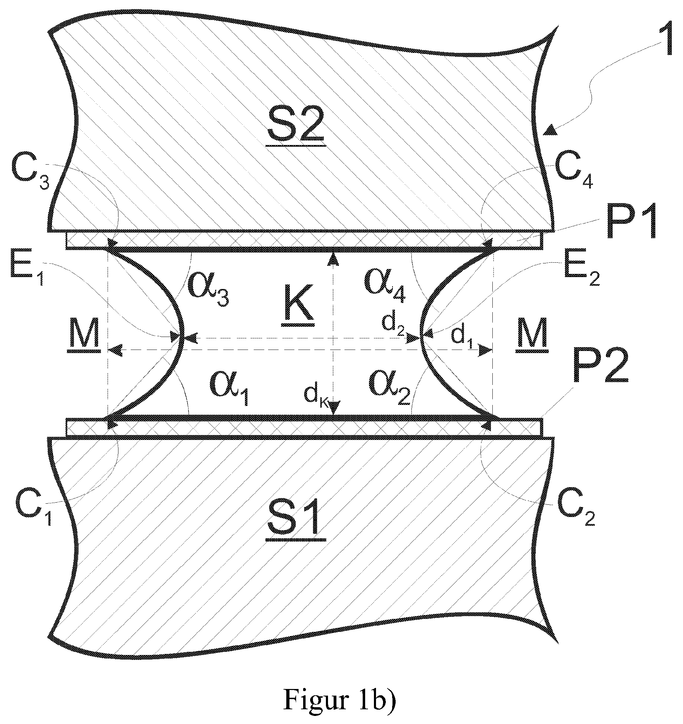

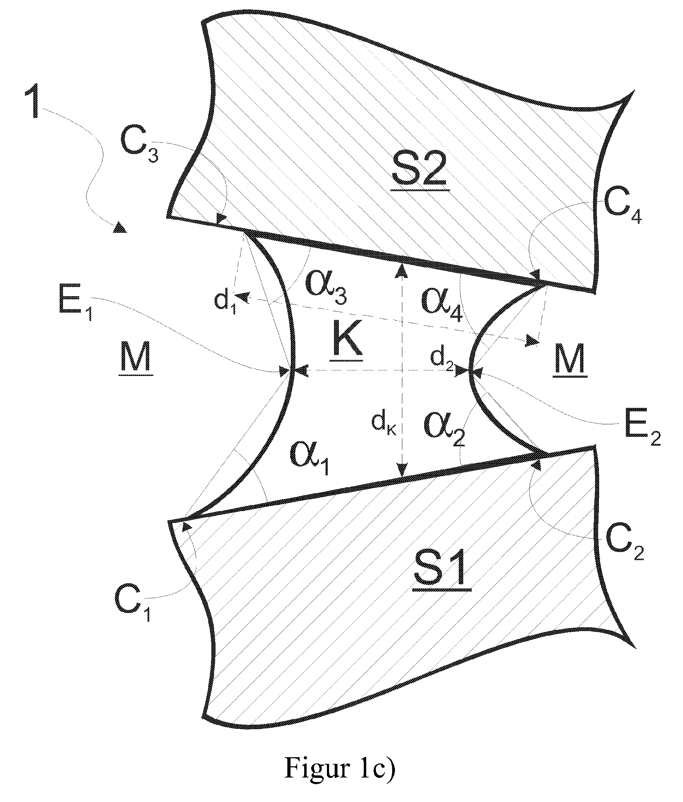

In Figur 1 sind unterschiedliche Ausführungsformen von Querschnitten Q durch einen Klebverbundkörper senkrecht zur Oberfläche des Substrates mit kleinster Querschnittsfläche des Klebstoffs dargestellt.

In Figur 1a ist ein Querschnitt Q durch einen ersten Klebverbundkörper 1 senkrecht zur Oberfläche des Substrates mit kleinster Querschnittsfläche des Klebstoffs dargestellt. Der Klebverbundkörper 1 umfasst hierbei ein erstes Substrat S1 und ein zweites Substrat S2 welches über einen Klebstoff K miteinander verklebt sind. Der Klebstoff K ist mit dem ersten Substrat S1 über die Grenzflächenlänge d₁ in direktem Kontakt. Die Endpunkte dieses Kontaktes stellen der erste Kontaktpunkt C₁ und der zweite Kontaktpunkt C₂ dar, an welchen der Klebstoff K, das erste Substrat S1 und Luft, als an den Klebstoff angrenzendes Medium M, aufeinander treffen.

Der Klebstoff K ist mit dem zweiten Substrat S2 über die Grenzflächenlänge d₁ in direktem Kontakt. Die Endpunkte dieses Kontaktes stellen der dritte Kontaktpunkt C₃ und der vierte Kontaktpunkt C₃ dar, an welchen der Klebstoff K, das zweite Substrat S2 und Luft, als an den Klebstoff angrenzendes Medium M, aufeinander treffen.

Der Klebstoff K ist eingeschnürt und weist die Einschnürungslänge d₂ auf, welche in diesem Beispiel auf halber Höhe der Endklebstoffdicke dₖ parallel zu den parallel orientierten Oberflächen der Substrate S1, S2 liegt, und welche kürzer als die Grenzflächenlänge d₁ ist. Die Endpunkte der Einschnürungslänge d₂ sind der erste Einschnürungspunkt E₁ und der zweite Einschnürungspunkt E₂. Der Klebstoff bildet in diesem Querschnitt Q mit der Luft M zwei Phasengrenzen. Eine Phasengrenze liegt zwischen dem ersten und dritten Kontaktpunkt C₁, C₃. Auf dieser Phasengrenze liegt auch der erste Einschnürungspunkt E₁. Die andere Phasengrenze liegt zwischen dem zweiten und vierten Kontaktpunkt C₂, C₄. Auf dieser Phasengrenze liegt auch der zweite Einschnürungspunkt E₂. Am ersten Kontaktpunkt C₁ ist ein erster Winkel α₁ vorhanden, welcher durch die Verbindungslinien zwischen dem erstem Kontaktpunkt C₁ und zweitem Kontaktpunkt C₂ sowie durch die Verbindungslinie zwischen erstem Kontaktpunkt C₁ und erstem Einschnürungspunkt E₁ aufgespannt wird. Am zweiten Kontaktpunkt C₂ ist ein zweiter Winkel α₂ vorhanden, welcher durch die Verbindungslinien zwischen dem zweitem Kontaktpunkt C₂ und erstem Kontaktpunkt C₁ sowie durch die Verbindungslinie zwischen zweitem Kontaktpunkt C₂ und zweitem Einschnürungspunkt E₂ aufgespannt wird. Am dritten Kontaktpunkt C₃ ist ein dritter Winkel α₃ vorhanden, welcher durch die Verbindungslinien zwischen dem dritten Kontaktpunkt C₃ und viertem Kontaktpunkt C₄ sowie durch die Verbindungslinie zwischen drittem Kontaktpunkt C₃ und erstem Einschnürungspunkt E₁ aufgespannt wird. Am vierten Kontaktpunkt C₄ schliesslich ist ein vierter Winkel α₄ vorhanden, welcher durch die Verbindungslinien zwischen dem viertem Kontaktpunkt C₄ und dritten Kontaktpunkt C₃ sowie durch die Verbindungslinie zwischen viertem Kontaktpunkt C₄ und zweitem Einschnürungspunkt E₂ aufgespannt wird. Alle vier Winkel α₁, α₂, α₃, α₄ streichen über den Klebstoff und sind etwa 46-50°.

Figur 1b ist im Wesentlichen gleich wie Figur 1a mit dem Unterschied, dass das erste Substrat S1 mit einem ersten Primer P1 beschichtet ist und dass das zweite Substrat S2 mit einem zweiten Primer P2 beschichtet ist.

Der Klebstoff K ist somit mit dem ersten Primer P1 über die Grenzflächenlänge d₁ in direktem Kontakt. Die Endpunkte dieses Kontaktes stellen der erste Kontaktpunkt C₁ und der zweite Kontaktpunkt C₂ dar, an welchen der Klebstoff K, der erste Primer P1 und Luft, als an den Klebstoff angrenzendes Medium M, aufeinander treffen.

Der Klebstoff K ist mit dem zweiten Primer P2 über die Grenzflächenlänge d₁ in direktem Kontakt. Die Endpunkte dieses Kontaktes stellen der dritte Kontaktpunkt C₃ und der vierte Kontaktpunkt C₄ dar, an welchen der Klebstoff K, der zweite Primer P2 und Luft, als an den Klebstoff angrenzendes Medium M, aufeinander treffen.

Der Klebstoff K ist eingeschnürt und weist die Einschnürungslänge d₂ auf, welche in diesem Beispiel auf halber Höhe der Endklebstoffdicke dₖ parallel zu den parallel orientierten Oberflächen der Substrate S1, S2, respektive den Primer P1, P2 liegt, und welche kürzer als die Grenzflächenlänge d₁ ist. Die Endpunkte der Einschnürungslänge d₂ sind der erste Einschnürungspunkt E₁ und der zweite Einschnürungspunkt E₂. Der Klebstoff bildet in diesem Querschnitt Q mit der Luft M zwei Phasengrenzen. Eine Phasengrenze liegt zwischen dem ersten und dritten Kontaktpunkt C₁, C₃. Auf dieser Phasengrenze liegt auch der erste Einschnürungspunkt E₁. Die andere Phasengrenze liegt zwischen dem zweiten und vierten Kontaktpunkt C₂, C₄. Auf dieser Phasengrenze liegt auch der zweite Einschnürungspunkt E₂. Am ersten Kontaktpunkt C₁ ist ein erster Winkel α₁ vorhanden, welcher durch die Verbindungslinien zwischen dem erstem Kontaktpunkt C₁ und zweitem Kontaktpunkt C₂ sowie durch die Verbindungslinie zwischen erstem Kontaktpunkt C₁ und erstem Einschnürungspunkt E₁ aufgespannt wird. Am zweiten Kontaktpunkt C₂ ist ein zweiter Winkel α₂ vorhanden, welcher durch die Verbindungslinien zwischen dem zweitem Kontaktpunkt C₂ und erstem Kontaktpunkt C₁ sowie durch die Verbindungslinie zwischen zweitem Kontaktpunkt C₂ und zweitem Einschnürungspunkt E₂ aufgespannt wird. Am dritten Kontaktpunkt C₃ ist ein dritter Winkel α₃ vorhanden, welcher durch die Verbindungslinien zwischen dem dritten Kontaktpunkt C₃ und viertem Kontaktpunkt C₄ sowie durch die Verbindungslinie zwischen drittem Kontaktpunkt C₃ und erstem Einschnürungspunkt E₁ aufgespannt wird. Am vierten Kontaktpunkt C₄ schliesslich ist ein vierter Winkel α₄ vorhanden, welcher durch die Verbindungslinien zwischen dem viertem Kontaktpunkt C₄ und dritten Kontaktpunkt C₃ sowie durch die Verbindungslinie zwischen viertem Kontaktpunkt C₄ und zweitem Einschnürungspunkt E₂ aufgespannt wird. Alle vier Winkel α₁, α₂, α₃, α₄ streichen über den Klebstoff und sind etwa 46-50°.

Figur 1c ist im Wesentlichen gleich wie Figur 1a mit dem Unterschied, dass die zwei Substrate S1, S2 nicht parallel sondern in einem Winkel zueinander angeordnet sind. Der Klebstoff K ist mit dem ersten Substrat S1 über die Grenzflächenlänge d₁ in direktem Kontakt. Die Endpunkte dieses Kontaktes stellen der erste Kontaktpunkt C₁ und der zweite Kontaktpunkt C₂ dar, an welchen der Klebstoff K, das erste Substrat S1 und Luft, als an den Klebstoff angrenzendes Medium M, aufeinander treffen.

Der Klebstoff K ist mit dem zweiten Substrat S2 über die über eine Phasengrenze Klebstoff/Substrat S2 in direktem Kontakt. Die Endpunkte dieses Kontaktes stellen der dritte Kontaktpunkt C₃ und der vierte Kontaktpunkt C₄ dar, an welchen der Klebstoff K, das zweite Substrat S2 und Luft, als an den Klebstoff angrenzendes Medium M, aufeinander treffen. Der Klebstoff K ist mit dem ersten Substrat S1 über eine Phasengrenze Klebstoff/Substrat S1 in Kontakt. Da die Strecke dieses Kontaktes zwischen dem ersten Kontaktpunkt C₁ und dem zweiten Kontaktpunkt C₂ länger als die Strecke des Kontaktes zwischen dem dritten Kontaktpunkt C₃ und dem vierten Kontaktpunkt C₄ ist, bezeichnet die Grenzflächenlänge d₁ die kürze Kontaktstrecke, d.h. die Strecke zwischen dem dritten Kontaktpunkt C₃ und dem vierten Kontaktpunkt C₄. Der Klebstoff K ist eingeschnürt und weist die Einschnürungslänge d₂ auf, welche in diesem Beispiel nicht parallel zu der Oberfläche der Substrate S1, S2 liegt. Die Endklebstoffdicke d_{K} ist das Mittel zwischen Abstand des ersten Kontaktpunktes C₁ vom dritten Kontaktpunkt C₃ und dem Abstand des zweiten Kontaktpunktes C₂ vom vierten Kontaktpunkt C₄. Die Endpunkte der Einschnürungslänge d₂ sind der erste Einschnürungspunkt E₁ und der zweite Einschnürungspunkt E₂. Der Klebstoff bildet in diesem Querschnitt Q mit der Luft M zwei Phasengrenzen. Eine Phasengrenze liegt zwischen dem ersten und dritten Kontaktpunkt C₁, C₃. Auf dieser Phasengrenze liegt auch der erste Einschnürungspunkt E₁. Die andere Phasengrenze liegt zwischen dem zweiten und vierten Kontaktpunkt C₂, C₄. Auf dieser Phasengrenze liegt auch der zweite Einschnürungspunkt E₂. Am ersten Kontaktpunkt C₁ ist ein erster Winkel α₁ vorhanden, welcher durch die Verbindungslinien zwischen dem erstem Kontaktpunkt C₁ und zweitem Kontaktpunkt C₂ sowie durch die Verbindungslinie zwischen erstem Kontaktpunkt C₁ und erstem Einschnürungspunkt E₁ aufgespannt wird. Am zweiten Kontaktpunkt C₂ ist ein zweiter Winkel α₂ vorhanden, welcher durch die Verbindungslinien zwischen dem zweitem Kontaktpunkt C₂ und erstem Kontaktpunkt C₁ sowie durch die Verbindungslinie zwischen zweitem Kontaktpunkt C₂ und zweitem Einschnürungspunkt E₂ aufgespannt wird. Am dritten Kontaktpunkt C₃ ist ein dritter Winkel α₃ vorhanden, welcher durch die Verbindungslinien zwischen dem dritten Kontaktpunkt C₃ und viertem Kontaktpunkt C₄ sowie durch die Verbindungslinie zwischen drittem Kontaktpunkt C₃ und erstem Einschnürungspunkt E₁ aufgespannt wird. Am vierten Kontaktpunkt C₄ schliesslich ist ein vierter Winkel α₄ vorhanden, welcher durch die Verbindungslinien zwischen dem viertem Kontaktpunkt C₄ und dritten Kontaktpunkt C₃ sowie durch die Verbindungslinie zwischen viertem Kontaktpunkt C₄ und zweitem Einschnürungspunkt E₂ aufgespannt wird. Alle vier Winkel α₁, α₂, α₃, α₄ streichen über den Klebstoff.

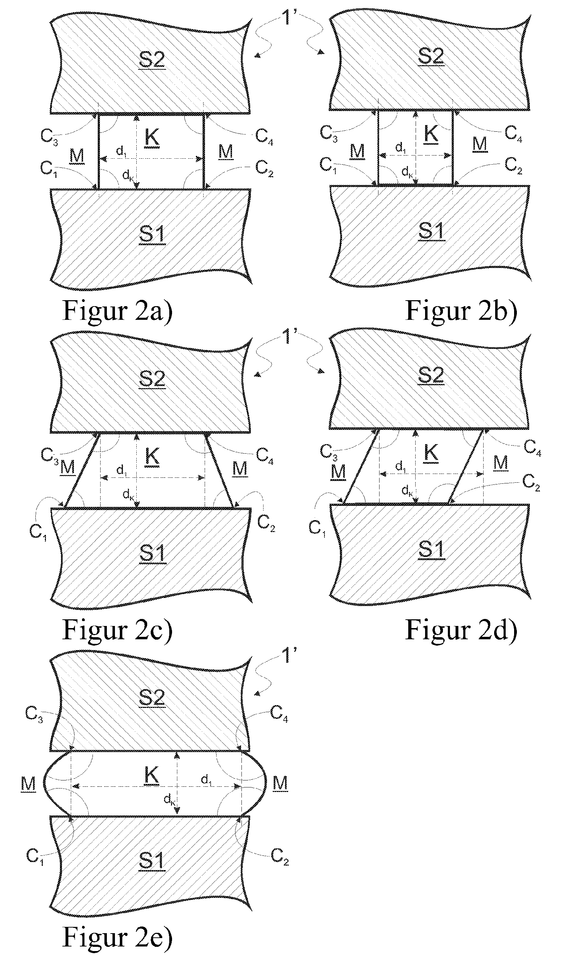

In Figur 2 sind unterschiedliche Beispiele von Querschnitten Q durch nicht erfindungsgemässe Klebverbundkörper 1' senkrecht zur Oberfläche des Substrates mit kleinster Querschnittsfläche des Klebstoffs K dargestellt.

In Figur 2a weist der Klebstoff einen rechteckigen Querschnitt auf. Der Klebstoff ist nicht eingeschnürt.

In Figur 2b weist der Klebstoff einen quadratischen Querschnitt auf. Der Klebstoff ist nicht eingeschnürt.

In Figur 2c weist der Klebstoff einen trapezoiden Querschnitt auf. Der Klebstoff ist nicht eingeschnürt. Diese Geometrie ergibt sich beispielsweise, wenn bei der Herstellung eines Verbundkörpers nach dem Stand der Technik die Fügepartner S1, S2 zu wenig verpresst werden.

In Figur 2d weist der Klebstoff einen rautenförmigen Querschnitt auf. Der Klebstoff ist nicht eingeschnürt. Diese Geometrie ergibt sich beispielsweise, wenn bei der Herstellung eines Verbundkörpers nach dem Stand der Technik die Fügepartner S1, S2 eine Oberfläche in Richtung parallel zur Oberfläche seitlich verschoben wird.

In Figur 2e weist der Klebstoff einen tonnenförmigen Querschnitt auf. Der Klebstoff ist nicht eingeschnürt. Diese Geometrie ergibt sich beispielsweise, wenn bei der Herstellung eines Verbundkörpers nach dem Stand der Technik die Fügepartner S1, S2 zu stark verpresst werden.

Bei all den Beispielen von Figur 2 ist der Klebstoff K nicht eingeschnürt. Deshalb gibt es auch keine Einschnürungsstrecke d₂ im Klebstoff, welche kleiner ist als die Grenzflächenlänge zwischen Klebstoff und erstem Substrat S1, respektive zweitem Substrat S2, sind. In Folge dessen sind auch keine Einschnürungspunkte und keine Winkel α₁, α₂, α₃, α₄ vorhanden. Mindestens zwei der Winkel in den Kontaktpunkten, die sich über den Klebstoff durch die Phasengrenze zwischen Klebstoff K und dem an den Klebstoff angrenzendem Medium M und die Phasengrenze zwischen Klebstoff K und den Substraten S1, S2 bilden, sind ≥ 90°.

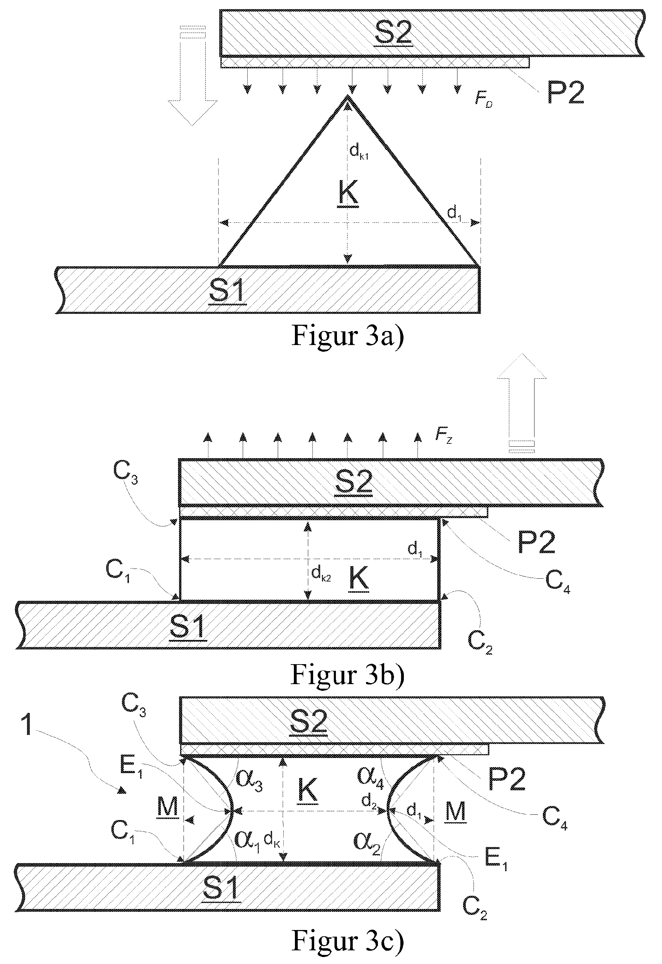

In Figur 3 ist ein erstes bevorzugtes Verfahren zur Herstellung eines Klebverbundkörpers 1 dargestellt im Querschnitt Q mit der kleinsten Querschnittsfläche des Klebstoffs senkrecht zur Oberfläche des Substrates. Der hier dargestellte Klebverbundkörpers ist ein Zugscherprobekörper. Andere Klebverbundkörper sind sinngemäss entsprechend diesem Beispiel auch möglich.

Die Figuren 3a bis 3c stellen die hierfür benutzten Schritte in zeitlicher Abfolge dar.

Figur 3a zeigt ein erstes Substrat S1, auf dessen Oberfläche ein Klebstoff K in Form einer Dreiecksraupe appliziert worden ist. Der Klebstoff weist eine Dreiecksquerschnittfläche auf und ist mit dem ersten Substrat S1 über eine Grenzflächelänge d₁ in Kontakt und weist eine Höhe auf, welche als Applikationsklebstoffdicke dₖ₁ bezeichnet wird. Das zweite Substrat S2 ist mit einem Primer P2 beschichtet. Dieses Primer-beschichtete Substrat wird unter Verwendung einer Druckkraft F_{d} mit dem Klebstoff kontaktiert. In dem hier dargestellten Beispiel erfolgt die Bewegung des Primer-beschichteten Substrates S2 vertikal zur Oberfläche des ersten Substrates S1 hin und die Druckkraft F_{d} erfolgt in dieselbe Richtung. Beim Verpressen des Klebstoffs mit dem Primer-beschichteten Substrat S2 wird die Grenzflächenlänge zwischen Primer und Klebstoff, d.h. die Strecke zwischen den zwischen dem dritten Kontaktpunkt C₃ und viertem Kontaktpunkt C₄ zunehmend grösser. Gleichzeitig nimmt die Dicke des Klebstoffs ab und zwar von der Applikationsklebstoffdicke dₖ₁ auf die Verpressklebstoffdicke dₖ₂.

Der Klebstoff K wird dieser soweit verpresst, bis der Klebstoff eine Dicke der Verpressklebstoffdicke dₖ₂ erreicht wird. Wird der Klebstoff zu wenig verpresst, resultiert nach dem Verpressen eine trapezoide Klebstoffflächenform, wie sie in Figur 2c dargestellt worden ist. Wird der Klebstoff zu stark verpresst, resultiert nach dem Verpressen eine tonnenförmige Klebstoffflächenform, wie sie in Figur 2e dargestellt worden ist.

Figur 3b zeigt den Beginn des Schrittes des Erzeugens der Einschnürung, indem durch das Aufbringen einer Zugkraft F_{z} vor dem Ende der Offenzeit des Klebstoffs auf den Klebverbundkörper in eine Richtung vertikal zur Oberfläche des ersten Substrates S1. Dadurch nimmt die Klebstoffdicke wieder zu, und zwar von der Verpressklebstoffdicke dₖ₂ auf die Endklebstoffdicke dₖ. Die Strecken zwischen den ersten und zweiten Kontaktpunkt C₁, C₂ sowie zwischen dem dritten und vierten Kontaktpunkt C₃, C₄ bleiben hierbei im Wesentlichen unverändert.

Figur 3c zeigt einen so hergestellten Klebverbundkörper 1 nach dem Einschnüren des Klebstoffs. Der Klebstoff weist hierbei eine Einschnürung mit der Einschnürungslänge d₂ welche begrenzt durch den ersten Einschnürungspunkt E₁ und den zweiten Einschnürungspunkt E₂ sind. Die Einschnürungsstrecke d₂ ist in diesem Bespiel parallel zu den zweiten Substratoberflächen S1, S2 und in der Mitte des Klebstoffs. Die vier Winkel α₁, α₂, α₃, α₄ werden wie bei Figur 1 detailliert beschrieben gebildet und weisen Werte von etwa 46-50° auf. Der Klebverbundkörper 1 weist diese Geometrie vor dem Aushärten aus. Nach dem Aushärten ist diese Geometrie ebenfalls vorhanden. Auch ohne das Anlegen von zusätzlichen Kräften.

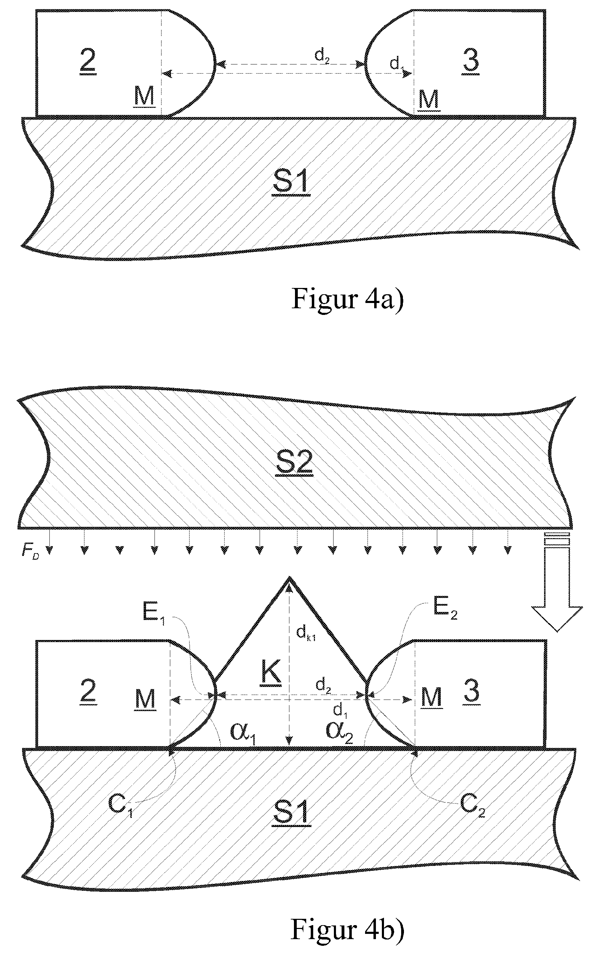

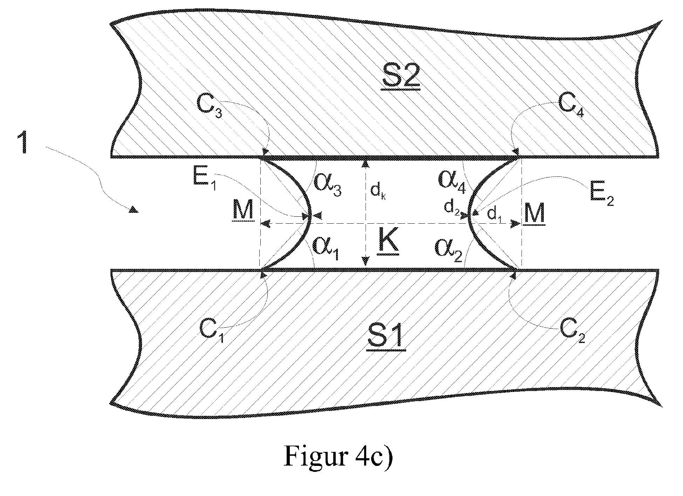

In Figur 4 ist ein weiteres Verfahren zur Herstellung eines Klebverbundkörpers 1 dargestellt im Querschnitt Q mit der kleinsten Querschnittsfläche des Klebstoffs senkrecht zur Oberfläche des Substrates.

Die Figuren 4a bis 4c stellen die hierfür benutzten Schritte in zeitlicher Abfolge dar.

Figur 4a zeigt ein erstes Substrat S1, auf dessen Oberfläche ein erstes Profil 2 und ein zweites Profil 3 aufgelegt werden. Zwischen den Profilen ist ein Abstand vorhanden. Die Profile sind haben konvexe Form, d.h. sie sind abgerundet, zumindest in Richtung des jeweilig anderen Profils. Die Profile sind bevorzugt aus Teflon.

Nun wird ein Klebstoff K in den Zwischenraum zwischen die Profile 2, 3 gepresst in Form einer Quasi-Dreieckesraupe. Die Höhe des Klebstoffes K ist die Applikationsklebstoffdicke dₖ₁. Der Klebstoff benetzt und füllt den Raum zwischen den Profilen aus. es bilden sich somit eine Grenzfläche zwischen Klebstoff K und erstem Substrat S1 begrenzt durch den ersten Kontaktpunkt C₁ und den zweiten Kontaktpunkt C₂, an welchem der Klebstoff K mit dem ersten Substrat S1 und dem ersten Profil 2, respektive zweiten Profil 3, aufeinander treffen.

Figur 4b zeigt die Phase im Herstellverfahren, bei dem das zweite Substrat S2 auf den Klebstoff K zu bewegt wird und durch das Aufbringen einer Druckkraft F_{D}, welche vertikal zur Oberfläche des ersten Substrates wirkt, verpresst wird. Beim Kontaktieren des Klebstoffs mit dem zweiten Substrat S2 bildet sich eine Grenzfläche Klebstoff K / zweites Substrat S2, welche mit zunehmendem Verpressen vergrössert wird. Gleichzeitig verringert sich die Klebstoffdicke von der Applikationsklebstoffdicke dₖ₁ zur Verpressklebstoffdicke, welche im vorliegenden Fall identisch mit der Endklebstoffdicke dₖ ist. Das Profil hat in dem hier beschriebenen Beispiel gleichzeitig eine Funktion als Abstandshalter.

Figur 4c zeigt die Situation am Ende des besagten Herstellprozesses, nachdem die Profile 2,3 entfernt wurden. Der so hergestellte Klebverbundkörper 1 weist vor dem Aushärten eine Einschnürung auf. Nach dem Aushärten ist diese Geometrie ebenfalls vorhanden. Auch ohne das Anlegen von zusätzlichen Kräften. Figur 4c entspricht somit der Figur 1a.

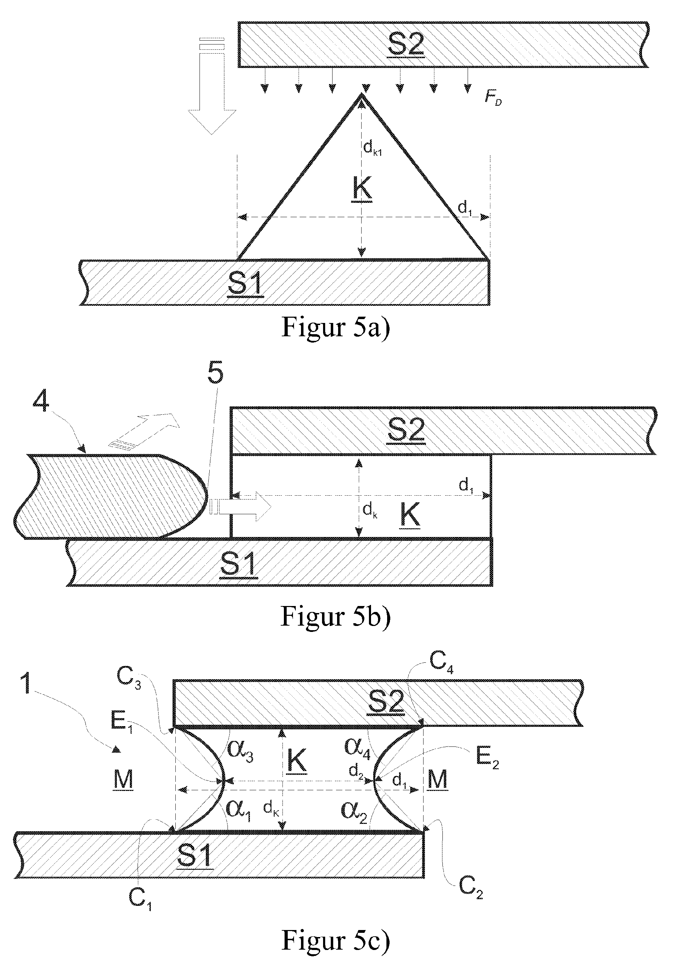

In Figur 5 ist ein drittes Verfahren zur Herstellung eines Klebverbundkörpers 1 dargestellt im Querschnitt Q mit der kleinsten Querschnittsfläche des Klebstoffs senkrecht zur Oberfläche des Substrates. Der hier dargestellte Klebverbundkörpers ist ein Zugscherprobekörper. Andere Klebverbundkörper sind sinngemäss entsprechend diesem Beispiel auch möglich.

Die Figuren 5a bis 5c stellen die hierfür benutzten Schritte in zeitlicher Abfolge dar.

Figur 5a zeigt ein erstes Substrat S1, auf dessen Oberfläche ein Klebstoff K in Form einer Dreiecksraupe appliziert worden ist. Der Klebstoff weist eine Dreiecksquerschnittfläche auf und ist mit dem ersten Substrat S1 über eine Grenzflächelänge d₁ in Kontakt und weist eine Höhe auf, welche als Applikationsklebstoffdicke dₖ₁ bezeichnet wird. Das zweite Substrat S2 wird unter Verwendung einer Druckkraft F_{d} mit dem Klebstoff kontaktiert. In dem hier dargestellten Beispiel erfolgt die Bewegung des Substrates S2 vertikal zur Oberfläche des ersten Substrates S1 hin und die Druckkraft F_{d} erfolgt in dieselbe Richtung. Beim Verpressen des Klebstoffs mit dem Substrat S2 wird die Grenzflächenlänge zwischen Substrat S2 und Klebstoff K, d.h. die Strecke zwischen den zwischen dem dritten Kontaktpunkt C₃ und viertem Kontaktpunkt C₄ zunehmend grösser. Gleichzeitig nimmt die Dicke des Klebstoffs ab und zwar von der Applikationsklebstoffdicke dₖ₁ auf die Verpressklebstoffdicke, welche in diesem Beispiel identisch mit der Endklebstoffdicke dₖ ist. Wird der Klebstoff zu wenig verpresst, resultiert nach dem Verpressen eine trapezoide Klebstoffflächenform, wie sie in Figur 2c dargestellt worden ist. Wird der Klebstoff zu stark verpresst, resultiert nach dem Verpressen eine tonnenförmige Klebstoffflächenform, wie sie in Figur 2e dargestellt worden ist.

Figur 5b zeigt den Beginn des Schrittes des Erzeugens der Einschnürung, indem mittels eines Spatels 4 mit abgerundeter Spitze 5 der Klebstoff seitlich an den zwei Grenzphasen zwischen Klebstoff K und Luft M teilweise entfernt wird. Dies erfolgt durch Einführen des Spatels in Richtung parallel zur Oberfläche des ersten Substrates in den Klebstoff hinein und anschliessendes Bewegen in dieser Ebene in Längsrichtung zur Klebstoffraupe, d.h. im hier gezeigten Querschnitt zuerst in der Blattebene und dann vertikal in die Blattebene hinein.

Figur 5c zeigt den so hergestellten Klebverbundkörper 1 nach dem Einschnüren des Klebstoffs. Der Klebstoff weist hierbei eine Einschnürung mit der Einschnürungslänge d₂ welche begrenzt durch den ersten Einschnürungspunkt E₁ und den zweiten Einschnürungspunkt E₂ sind. Die Einschnürungsstrecke d₂ ist in diesem Bespiel parallel zu den zweiten Substratoberflächen S1, S2 und in der Mitte des Klebstoffs. Die vier Winkel α₁, α₂, α₃, α₄ werden wie bei Figur 1 detailliert beschrieben gebildet und weisen Werte von etwa 46-50° auf. Der Klebverbundkörper 1 weist diese Geometrie vor dem Aushärten aus. Nach dem Aushärten ist diese Geometrie ebenfalls vorhanden. Auch ohne das Anlegen von zusätzlichen Kräften.

### Beispiele

Im Folgenden wird ein konkretes Beispiel aufgeführt, welches die Erfindung noch weiter illustrieren soll. Als hier gezeigtes Beispiel wird die Herstellung eines Zugscherprobekörpers gezeigt.

### Herstellung Zugscherprobenkörper

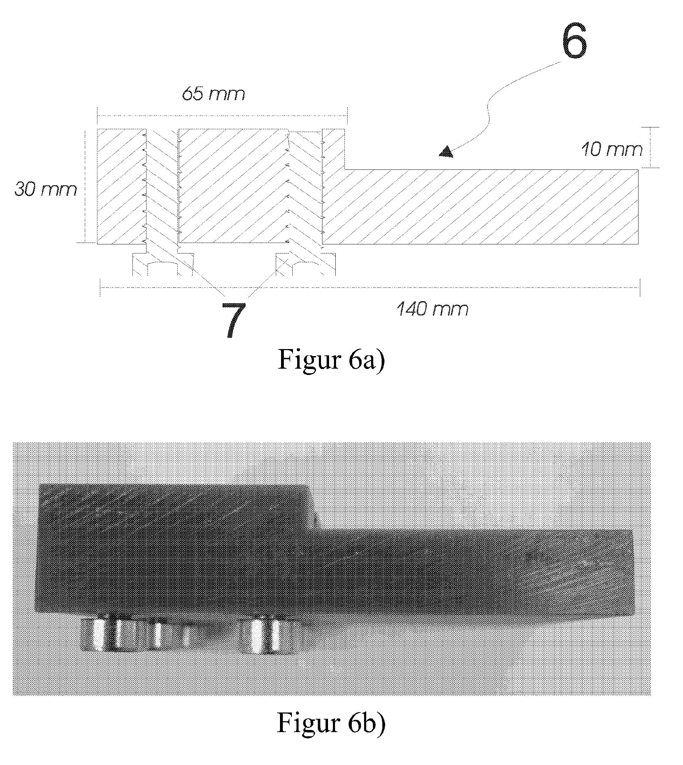

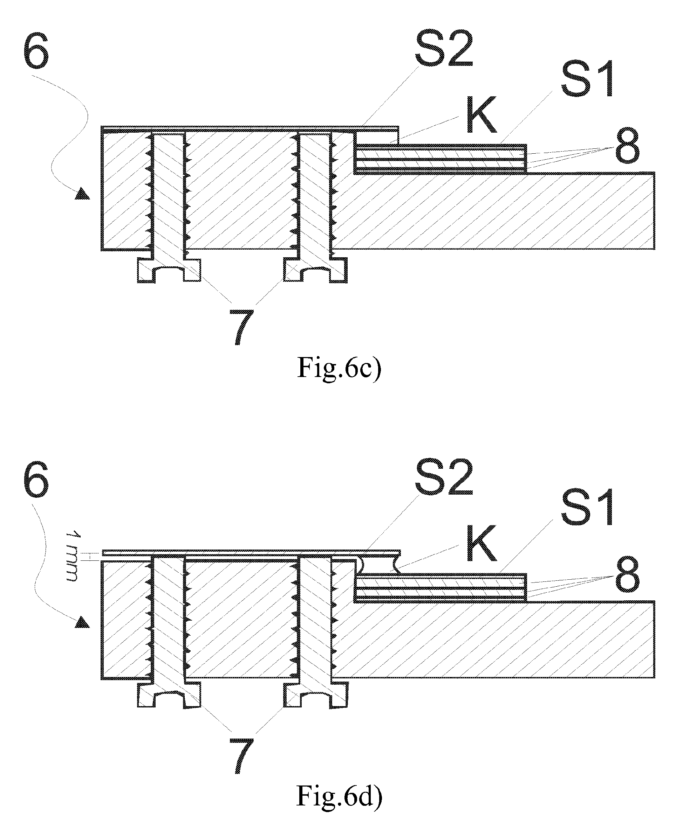

Es wurde eine Zugscherprobenkörperform 6 für drei Zugscherproben aus Teflon mit sechs Schrauben 7 hergestellt (140 x 100 x 30 mm, mit HauptAussparung 75 x 100 x 10 mm und zwei Zwischen-Ausparungen von 65 x 12.5 x 10 mm), wie er in Figur 6b von der Seite fotografiert und schematisch im Querschnitt in Figur 6a gezeigt ist. Wie in Figur 6c dargestellt, wurden in die Aussparung Abstandsplatten 8 gelegt, so dass die Aussparung eine Resttiefe von 5 mm aufweist. Dann wurde ein Automobillackblech der Dimension 100 x 40 x 1 mm quer in die Hauptaussparung aufgelegt und mittels Fixierklebeband 9 an der Form fixiert. Anschliessend wurde der Klebstoff Sikaflex®-250 UH-1 cool (kommerziell erhältlich bei Sika Corporation, USA) als Dreiecksraupe appliziert. Anschliessend wurden drei Automobillackbleche der Dimension 80 x 25 x 1 mm auf den Klebstoff verpresst und mittels zusätzlicher Platte und einer Klemme auf der Form fixiert. Die Klebstoffschicht hatte somit die Dimension von 15x25x4mm.
Die Vergleichsprobekörper ***Ref. 1*** wurden so ausgehärtet.
Um eingeschnürte Klebverbundkörper zu erhalten, wurde durch das Einschrauben der Schrauben, wie in Figur 6d dargestellt, der Abstand zwischen der Form und den Lackblechen auf 1 mm, und damit die Klebstoffdicke von 4 mm auf 5 mm vergrössert. Die Probekörper 1 wurden in dieser Position ausgehärtet.

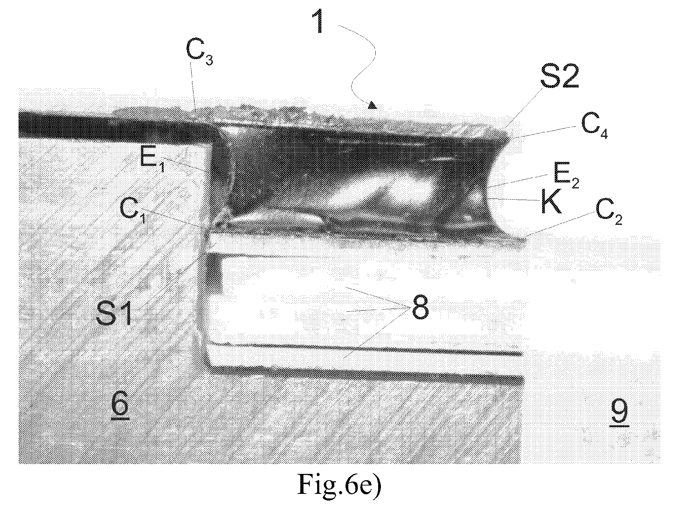

Figur 6e ist eine fotographische Seitenansicht eines so hergestellten Klebverbundkörpers 1.

Die Aushärtung erfolgte bei 23°C und 50 % rel. Luftfeuchtigkeit während 7 Tagen.

Die verwendeten Lackbleche (DuPont Clear Coat RK 8034, ACT Laboratories) wurden mit Sika® Aktivator UH-2 LUM (kommerziell erhältlich von Sika Corporation, USA) vorbehandelt und während 10 Minuten abgelüftet.

**Tabelle 1. Abmessungen der Klebverbundkörpers in Fig. 6e.**

| Kontaktpunkt | Winkel | Winkelgrösse |
|---|---|---|
| C₁ | α₁ | 65° |
| C₂ | α₂ | 55° |
| C₃ | α₃ | 61° |
| C₄ | α₄ | 65° |
| | | |
| Einschnürungslänge | d₂ | 12.3 mm |
| Grenzflächenlänge | d₁ | 15.0 mm |
| Endklebstoffdicke | d_{K} | 5.0 mm |

### Zugscherfestigkeitsprüfung

Die Zuscherprüfung der Klebverbundkörper erfolgte nach DIN EN 1465 bei -40°C bei einer Zuggeschwindigkeit von 20 mm/min. Die Resultate sind in Tabelle 2 wiedergegeben.

**Tabelle 2. Zugscherproben-Ergebnisse. *Der Rest ist ein kohäsiver Bruch im Klebstoff.**

| | maximale Kraft [N] | Zugscherfestigkeit [MPa] | Anteil Lackbruch* [%] |
|---|---|---|---|
| ***Ref. 1*** | | | |
| 1. Messung | 1744 | 4.7 | 30 |
| 2. Messung | 1384 | 3.6 | 75 |
| 3. Messung | 1128 | 3.0 | 75 |

| ***1*** | | | |
|---|---|---|---|
| 1. Messung | 2404 | 6.4 | 30 |
| 2. Messung | 3291 | 8.8 | 0 |
| 3. Messung | 2766 | 7.4 | 0 |

Die Ergebnisse der Tabelle 2 zeigen deutlich, dass die eingeschnürten Klebverbundkörper eine stark vergrösserte Maximalkraft übertragen können und somit eine deutlich höhere Zugscherfestigkeit als die nicht eingeschnürten Referenz-Klebverbundkörper aufweisen. Zudem ist klar ersichtlich, dass die eingeschnürten Klebverbundkörper eine markant verbesserte Haftung auf dem Automobildeckblech aufweisen als die nicht-eingeschnürten Klebverbundkörper.

### Bezugszeichenliste

- α₁: erster Winkel
- α₂: zweiter Winkel
- α₃: dritter Winkel
- α_{4'}: vierter Winkel
- 1: Klebverbundkörper
- 1': Klebverbundkörper
- 2: erstes Profil
- 3: zweites Profil
- 4: Spatel mit abgerundeter Spitze
- 5: Rundung des Spatels
- 6: Zugscherprobenkörper-Form
- 7: Schraube
- 8: Abstandsplatte
- 9: Fixierklebeband
- d₁: Grenzflächenlänge
- d₂: Einschnürungslänge
- d_{K}: Endklebstoffdicke
- d_{K1}: Applikationsklebstoffdicke
- d_{K2}: Verpressklebstoffdicke
- C₁: erster Kontaktpunkt
- C₂: zweiter Kontaktpunkt
- C₃: dritter Kontaktpunkt
- C₄: vierter Kontaktpunkt
- E₁: erster Einschnürungspunkt
- E₂: zweiter Einschnürungspunkt
- F_{d}: Druckkraft
- F_{z}: Zugkraft
- K: Klebstoff
- M: Umgebungsmedium
- P1: erster Primer
- P2: zweiter Primer
- Q: Querschnitt
- S1: erstes Substrat
- S2: zweites Substrat

## Patentansprüche

**1.** Klebverbundkörper (1) umfassend ein erstes Substrat (S1) und ein zweites Substrat (S2), welche mittels eines Klebstoffes (K),
gegebenenfalls über einen ersten Primer (P1) zwischen dem ersten Substrat (S1) und dem Klebstoff und/oder über einen zweiten Primer (P2) zwischen dem zweiten Substrat (S2) und dem Klebstoff,
miteinander verklebt sind, **dadurch gekennzeichnet, dass**
der Klebstoff (K) in demjenigen Querschnitt (Q) durch den Klebverbundkörper senkrecht zur Oberfläche des ersten Substrates (S1) welcher die kleinste Querschnittsfläche des Klebstoffs (K) ergibt, eine Einschnürung aufweist.

**2.** Klebverbundkörper (1) gemäss Anspruch 1, **dadurch gekennzeichnet, dass** die Einschnürung **dadurch** definiert ist, dass im Querschnitt (Q) die Einschnürungsstrecke (d₂), welche die kleinste Strecke im Klebstoff zwischen zwei Phasengrenzen von Klebstoff zu dem an den Klebstoff angrenzenden Medium (M) darstellt, kleiner als die kleinere der zwei Grenzflächenlängen (d₁) ist, welche die Kontaktstreckenlängen von Klebstoff zum Substrat (S1, S2) oder, falls vorhanden, zum Primer (P1, P2) ist.

**3.** Klebverbundkörper (1) gemäss Anspruch 2, **dadurch gekennzeichnet, dass** das Verhältnis (d₂/d₁) von Einschnürungslänge (d₂) zu Grenzflächenlänge (d₁) einen Wert von kleiner 1 und grösser 0, insbesondere einen Wert zwischen 0.5 und 0.9, bevorzugt zwischen 0.5 und 0.8, aufweist.

**4.** Klebverbundkörper (1) gemäss Anspruch 2 oder 3, **dadurch gekennzeichnet, dass** im Querschnitt (Q) ein erster Winkel (α₁), ein zweiter Winkel (α₂), ein dritter Winkel (α₃) und ein vierter Winkel (α₄) vorhanden sind, die je > 5° und < 85° sind,
wobei der erste Winkel (α₁) am ersten Kontaktpunkt (C₁) aufgespannt wird von den Strecken zwischen erstem Kontaktpunkt (C₁) und zweitem Kontaktpunkt (C₂) sowie zwischen erstem Kontaktpunkt (C₁) und erstem Einschnürungspunkt (E₁);
der zweite Winkel (α₂) am zweiten Kontaktpunkt (C₂) aufgespannt wird von den Strecken zwischen zweitem Kontaktpunkt (C₂) und erstem Kontaktpunkt (C₁) sowie zwischen zweiten Kontaktpunkt (C₂) und zweitem Einschnürungspunkt (E₂);
der dritte Winkel (α₃) am dritten Kontaktpunkt (C₃) aufgespannt wird von den Strecken zwischen drittem Kontaktpunkt (C₃) und viertem Kontaktpunkt (C₄) sowie zwischen drittem Kontaktpunkt (C₃) und erstem Einschnürungspunkt (E₁);
der vierte Winkel (α₄) am vierten Kontaktpunkt (C₄) aufgespannt wird von den Strecken zwischen viertem Kontaktpunkt (C₄) und drittem Kontaktpunkt (C₃) sowie zwischen viertem Kontaktpunkt (C₄) und zweitem Einschnürungspunkt (E₂);
wobei der erste Einschnürungspunkt (E₁) und der zweite Einschnürungspunkt (E₂) die Endpunkte der Einschnürungsstrecke d₂ darstellen
und wobei der erste Kontaktpunkt (C₁), der dritte Kontaktpunkt (C₃) und der erste Einschnürungspunkt (E₁) auf derselben Phasengrenze (P1) zwischen Klebstoff und Klebstoff angrenzendem Medium (M) liegen
und
der zweite Kontaktpunkt (C₂), der vierte Kontaktpunkt (C₄) und der zweite Einschnürungspunkt (E₂) auf derselben Phasengrenze (P2) zwischen Klebstoff und Klebstoff angrenzendem Medium (M) liegen.

**5.** Klebverbundkörper (1) gemäss einem der vorhergehenden Ansprüche, **dadurch gekennzeichnet, dass** der erste Winkel (α₁) und/oder der zweite Winkel (α₂) und/oder der dritte Winkel (α₃) und/oder der vierte Winkel (α₄) eine Wert zwischen 10° und 80°, insbesondere zwischen 25° und 75°, vorzugsweise zwischen 35° und 70°, bevorzugt zwischen 45° und 65° beträgt.

**6.** Klebverbundkörper (1) gemäss einem der vorhergehenden Ansprüche, **dadurch gekennzeichnet, dass** der erste, der zweite, der dritte und der vierte Winkel (α₁, α₂, α₃ und α₄) alle einen Wert zwischen 10° und 80°, insbesondere zwischen 25° und 75°, vorzugsweise zwischen 35° und 70, bevorzugt zwischen 45° und 65° betragen.

**7.** Klebverbundkörper (1) gemäss einem der vorhergehenden Ansprüche, **dadurch gekennzeichnet, dass** die Enddicke der Klebstoffschicht (d_{K}) zwischen 1 mm und 20 mm, insbesondere zwischen 1 mm und 10 mm, bevorzugt zwischen 3 mm und 8 mm, beträgt.

**8.** Klebverbundkörper (1) gemäss einem der vorhergehenden Ansprüche, **dadurch gekennzeichnet, dass** das erste Substrat (S1) und das zweite Substrat (S2) parallel angeordnet sind.

**9.** Klebverbundkörper (1) gemäss einem der Ansprüche 2 bis 8, **dadurch gekennzeichnet, dass** die Grenzflächenlänge (d₁) einen Wert von 2 mm bis 4 cm, insbesondere zwischen 5 mm bis 2 cm, bevorzugt zwischen 8 mm und 16 mm, beträgt.

**9.** Klebverbundkörper (1) gemäss einem der vorhergehenden Ansprüche, **dadurch gekennzeichnet, dass** der Klebstoff (K) ein pastöser Klebstoff, insbesondere auf Basis eines flüssigen bis zähflüssigen Klebstoffbindemittels und eines Füllstoffes, ist.

**10.** Klebverbundkörper (1) gemäss Anspruch 9, **dadurch gekennzeichnet, dass** der Klebstoff ein Russ-gefüllter feuchtigkeitshärtender Klebstoff basierend auf einem Isocyanatgruppen und/oder Silangruppen aufweisenden Polyurethanprepolymer ist.

**11.** Verfahren zur Herstellung eines Klebverbundkörpers (1) gemäss einem der Ansprüche 1 bis 10, umfassend die Schritte
i) Applizieren des Klebstoffes (K) auf die Oberfläche des ersten Substrates (S1) in Form einer Dreiecksraupe mit einer Applikationsklebstoffdicke (d_{K1})
ii) Kontaktieren des Klebstoffes (K) mit der Oberfläche des zweiten Substrates (S2)
iii) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und **dadurch** erfolgendes Verkleinern der Klebstoffdicke von der Applikationsklebstoffdicke (dₖ₁) auf eine Verpressklebstoffdicke (dₖ₂)
iv) Einschnüren des Klebstoffes (K) durch Aufbringen einer Zugkraft (F_{z}) mit einer senkrecht auf die Oberfläche des ersten Substrates (S1) und/oder des zweiten Substrates (S2) wirkenden Kraftkomponente vor dem Ende der Offenzeit des Klebstoffes (K) und **dadurch** erfolgendes Vergrössern der Klebstoffdicke von der Verpressklebstoffdicke (dₖ₂) auf eine Endklebstoffdicke (dₖ)
oder
i') Applizieren des Klebstoffes (K) auf die Oberfläche des zweiten Substrates (S2) in Form einer Dreiecksraupe mit einer Applikationsklebstoffdicke (d_{K1})
ii') Kontaktieren des Klebstoffes (K) mit der Oberfläche des ersten Substrates (S1)
iii) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und **dadurch** erfolgendes Verkleinern der Klebstoffdicke von der Applikationsklebstoffdicke (dₖ₁) auf eine Verpressklebstoffdicke (dₖ₂)
iv) Einschnüren des Klebstoffes (K) durch Aufbringen einer Zugkraft (F_{z}) mit einer senkrecht auf die Oberfläche des ersten Substrates (S1) und/oder des zweiten Substrates (S2) wirkenden Kraftkomponente vor dem Ende der Offenzeit des Klebstoffes (K) und **dadurch** erfolgendes Vergrössern der Klebstoffdicke von der Verpressklebstoffdicke (dₖ₂) auf eine Endklebstoffdicke (dₖ).

**12.** Verfahren zur Herstellung eines Klebverbundkörpers (1) gemäss einem der Ansprüche 1 bis 10, umfassend die Schritte
I) Auflegen zweier zueinander beabstandeten Profile (2,3) aus einem Material, welches vorzugsweise keine Haftung mit dem Klebstoff aufweist, und deren jeweilige Oberfläche konvex gewölbt ist in Richtung zum jeweilig anderen Profil auf die Oberfläche des ersten Substrates (S1) oder des zweiten Substrates (S2)
II) Applizieren des Klebstoffes (K) auf die Oberfläche des ersten des ersten Substrates (S1) oder des zweiten Substrates (S2) zwischen die zwei beabstandeten Profile mit einer Applikationsklebstoffdicke (d_{K1})
III) Kontaktieren des Klebstoffes mit der Oberfläche des zweiten Substrates (S2) oder des ersten Substrates (S1)
IV) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente vor dem Ende der Offenzeit des Klebstoffes (K) und **dadurch** erfolgendes Verkleinern der Klebstoffdicke von der Applikationsklebstoffdicke (dₖ₁) auf eine Endklebstoffdicke (dₖ)

**13.** Verfahren gemäss Anspruch 12, **dadurch gekennzeichnet, dass** die Profile aus Teflon oder Polyethylen oder Polypropylen sind.

**14.** Verfahren zur Herstellung eines Klebverbundkörpers (1) gemäss einem der Ansprüche 1 bis 10, umfassend die Schritte
I) Applizieren des Klebstoffes (K) auf die Oberfläche des ersten Substrates (S1) oder des zweiten Substrates (S2) in Form einer Dreiecksraupe mit einer Applikationsklebstoffdicke (d_{K1})
II) Kontaktieren des Klebstoffes (K) mit der Oberfläche des zweiten Substrates (S2) oder des ersten Substrates (S1)
III) Verpressen des Klebstoffes (K) durch Aufbringen einer Druckkraft (F_{d}) mit einer senkrecht auf die Oberfläche des ersten Substrates (S1) und/oder des zweiten Substrates (S2) wirkenden Kraftkomponente und **dadurch** erfolgendes Verkleinern der Klebstoffdicke von der Applikationsklebstoffdicke (dₖ₁) auf eine Endklebstoffdicke (dₖ)
IV) Abstreifen von Klebstoff mittels eines Spatels (4) mit einer abgerunden Spatelkante vor dem Ende der Offenzeit des Klebstoffes (K) und **dadurch** erfolgendes Einschnüren des Klebstoffes.

**15.** Verfahren gemäss einem der Ansprüche 11 bis 14, **dadurch gekennzeichnet, dass** das erste Substrat (S1) und/oder das zweite Substrat (S2) vorgängig mit einem Primer (P1, P2) vorbehandelt worden ist.

**16.** Verfahren gemäss einem der Ansprüche 11 bis 15, **dadurch gekennzeichnet, dass** anschliessend an die Schritte iv) oder IV) oder IV) ein Schritt v) oder V) oder v) des Aushärtens des Klebstoffes erfolgt.

**17.** Verfahren gemäss Anspruch 16, **dadurch gekennzeichnet, dass** das Aushärten des Klebstoffes durch Aushärten mittels Feuchtigkeit, insbesondere Luftfeuchtigkeit, erfolgt.

**18.** Ausgehärteter Klebverbundkörper (1) hergestellt nach einem Verfahren gemäss Anspruch 16 oder 17.

**19.** Verfahren zur Erhöhung der Kraftübertragung in einem verklebten Artikel, umfassend mindestens ein erstes Substrat (S1) und ein zweites Substrat (S2) sowie einen Klebstoff, welcher die zwei Substrate miteinander verbinden, **dadurch gekennzeichnet, dass** der Klebstoff eine Einschnürung aufweist.

**20.** Verfahren gemäss Anspruch 19, **dadurch gekennzeichnet, dass** im Querschnitt der Verklebung die Querschnittsfläche des Klebstoffs kein trapezoide oder quadratische oder rechteckige Form oder Rautenform oder Tonnenform aufweist.
